# EUROPÄISCHE PATENTSCHRIFT

(11) **EP 4 167 351 B1**
(45) Veröffentlichungstag und Bekanntmachung des Hinweises auf die Patenterteilung: **25.11.2026**
(21) Anmeldenummer: 22200710.6
(22) Anmeldetag: 11.10.2022
(51) Int. Cl.: H01M 10/6568, H01M 10/613, F16L 3/18, F16L 51/02, F16L 27/12, F16L 27/11, H01M 10/625

(54) **VERFAHREN ZUM FLUIDLEITENDEN VERBINDEN VON MITTELS EINES FLUIDS TEMPERIERTEN FUNKTIONSMODULEN, ENTSPRECHEND TEMPERIERTE FUNKTIONSMODULE UND ZUGEHÖRIGE VERBINDUNGSVORRICHTUNG**
METHOD FOR FLUID-CONDUCTING CONNECTING OF FUNCTIONAL MODULES TEMPERATURE-CONTROLLED BY MEANS OF FLUID, FUNCTIONAL MODULES TEMPERATURE-CONTROLLED ACCORDING TO SAID METHOD, AND ASSOCIATED CONNECTING DEVICE
PROCÉDÉ DE RACCORDEMENT FLUIDIQUE DE MODULES FONCTIONNELS THERMORÉGULÉS AU MOYEN D'UN FLUIDE, MODULES FONCTIONNELS THERMORÉGULÉS CORRESPONDANTS ET DISPOSITIF DE RACCORDEMENT ASSOCIÉ

(30) Priorität: 12.10.2021 DE 102021126429
(43) Veröffentlichungstag der Anmeldung: 19.04.2023
(73) Patentinhaber: Witzenmann GmbH, 75175 Pforzheim (DE)
(72) Erfinder: Ehrenberger, David, 75203 Königsbach-Stein (DE); Ritter, Maximilian, 75339 Höfen an der Enz (DE); Ludwig, Jörg, 75177 Pforzheim (DE); LEIPPI, Alexander, 75177 Pforzheim (DE)
(74) Vertreter: LBP Lemcke, Brommer & Partner Patentanwälte mbB

(56) Entgegenhaltungen:
- EP-A1- 3 614 094
- DE-A1- 102012 222 623
- JP-A- 2012 180 876

## Beschreibung

Ein erster Aspekt der Erfindung betrifft ein Verfahren zum fluidleitenden Verbinden von mittels eines Fluids temperierten Funktionsmodulen, insbesondere Batteriemodulen, gemäß dem Oberbegriff des Anspruchs 1.

Ein zweiter Aspekt der Erfindung betrifft eine Verbindungsvorrichtung gemäß Anspruch 7 zum fluidleitenden Verbinden von mittels eines Fluids temperierten Funktionsmodulen, insbesondere Batteriemodulen, welche Funktionsmodule jeweils zumindest einen Leitungsstutzen zum Einleiten und/oder Ausleiten des Fluids aufweisen.

Ein dritter Aspekt der Erfindung betrifft eine Verbindungsanordnung gemäß Anspruch 13, umfassend wenigstens eine Verbindungsvorrichtung gemäß dem zweiten Aspekt der Erfindung und wenigstens eine Fluidleitung zum Zuführen und/oder Abführen des Fluids, welche Fluidleitung über das Trägermodul der Verbindungsvorrichtung fluidleitend mit den Anschlussstücken verbunden ist.

Ein vierter Aspekt der Erfindung betrifft mittels eines Fluids temperierte Funktionsmodule gemäß Anspruch 14, insbesondere Batteriemodule, welche Funktionsmodule jeweils zumindest einen Leitungsstutzen zum Einleiten und/oder Ausleiten des Fluids aufweisen, mit einer Verbindungsanordnung gemäß dem dritten Aspekt der Erfindung.

Speziell bei batteriebetriebenen Kraftfahrzeugen besteht die Anforderung, in der Batterie montierte Zellmodule (Batteriemodule, allgemein Funktionsmodule) über einen zentralen Versorgungskanal mit einem Temperierfluid zu versorgen und dieses wieder abzuführen. Dabei lässt der vorgegebene, beengte Bauraum es in der Regel nicht zu, eine einteilige Fluidleitungsanordnung im Bereich zwischen den Funktionsmodulen zu montieren.

Um dem zu begegnen, ist nach dem Stand der Technik vorgesehen, einzelne Leitungssegmente an den Leitungsstutzen der Funktionsmodule zu montieren. Dadurch bedingt sich eine Teilung der (Haupt-)Fluidleitungen in Segmente. Diese Leitungssegmente müssen in der Regel nach dem Einsetzen der Module, mit jeweils vormontierten Leitungssegmenten, aufwendig zu den Hauptfluidleitungen verbunden werden. Es entstehen vielzählige Verbindungsstellen, die jeweils bereits nach der Montage und im Betrieb eine (statistische) Ausfallwahrscheinlichkeit größer Null besitzen. Mit der Anzahl der verbauten Verbindungen erhöht sich die Ausfallwahrscheinlichkeit des gesamten Systems, da bereits der Ausfall einer Verbindung zum Ausfall des kompletten Systems führt.

JP 2012 180 876 A zeigt ein solches System, bei dem einzelne Batteriemodule von zwei Seiten mittels separater Leitungssegmente aufwending verbunden werden.

Bei einer erhöhten Anzahl von Verbindungsstellen steigt die Ausfallwahrscheinlichkeit des Gesamtsystems bereits zu Beginn des Produktlebenszyklus rein durch die statistische Ausfallwahrscheinlichkeit jeder einzelnen Verbindung. Der Erfindung liegt die Aufgabe zugrunde, die Anzahl an Verbindungsstellen und damit die Ausfallwahrscheinlichkeit zu senken.

Weiterhin ist es eine Aufgabe der Erfindung, die Montage der Fluidleitungen hinsichtlich der Zugänglichkeit für den Werker und für die von ihm eingesetzten Werkzeuge zu optimieren. Dies gilt auch bei maschineller Montage. Ziel hierbei ist vorzugsweise eine Montage in vertikaler Z-Richtung (z.B. in einem Fahrzeugkoordinatensystem) mit anschließender optional werkzeugunterstützter Kontaktierung der einzelnen Batteriemodule (Funktionsmodule) und einer Sicherung/Fixierung der Fluidleitungen im montierten und verbundenen Zustand.

Die genannte Aufgabe wird erfindungsgemäß gelöst durch ein Verfahren mit den Merkmalen des Anspruchs 1, durch eine Verbindungsvorrichtung mit den Merkmallen des Anspruchs 7, durch eine Verbindungsanordnung mit den Merkmalen des Anspruchs 13 sowie durch mittels eines Fluids temperierte Funktionsmodule mit den Merkmalen des Anspruchs 14.

Ein erfindungsgemäßes Verfahren zum fluidleitenden Verbinden von mittels eines Fluids temperierten Funktionsmodulen, insbesondere Batteriemodulen, beinhaltet den Schritt:
a) Bereitstellen der Funktionsmodule, welche Funktionsmodule jeweils zumindest einen Leitungsstutzen zum Einleiten und/oder Ausleiten des Fluids aufweisen;
ist gekennzeichnet durch die weiteren Schritte:
b) Anordnen von wenigstens zwei Funktionsmodulen in einem Abstand zueinander derart, dass die betreffenden Leitungsstutzen im Wesentlichen einander genau gegenüberliegend und entlang einer ersten Achse fluchtend angeordnet sind und in einen Bereich zwischen den Funktionsmodulen münden;
c) Einbringen einer zumindest teilweise flexiblen, vormontierten Verbindungsanordnung in den Bereich zwischen den Funktionsmodulen, welche Verbindungsanordnung wenigstens eine Fluidleitung zum Zuführen und/oder Abführen des Fluids und wenigstens zwei von der Fluidleitung oder jeweils von einer der Fluidleitungen abgehende fluidleitende Anschlussstücke aufweist, derart, dass die Anschlussstücke entlang der ersten Achse jeweils mit einem der Leitungsstutzen fluchten;
d) Verändern eines Abstands zwischen den Anschlussstücken und/oder einer Länge der Anschlussstücke, die flexibel, z.B. als Balg oder Wellschlauch, ausgebildet sein können, entlang der ersten Achse, so dass die Anschlussstücke jeweils einen der Leitungsstutzen fluidleitend kontaktieren.

Eine erfindungsgemäße Verbindungsvorrichtung zum fluidleitenden Verbinden von mittels eines Fluids temperierten Funktionsmodulen, insbesondere Batteriemodulen, welche Funktionsmodule jeweils zumindest einen Leitungsstutzen zum Einleiten und/oder Ausleiten des Fluids aufweisen, umfasst:
- ein Trägermodul zum Lagern wenigstens einer Fluidleitung zum Zuführen und/oder Abführen des Fluids;
- wenigstens zwei über das Trägermodul fluidleitend mit der Fluidleitung oder mit jeweils einer der Fluidleitungen verbindbare bzw. verbundene fluidleitende Anschlussstücke, welche Anschlussstücke entlang einer ersten Achse fluchten;
- eine Kinematikeinrichtung, die an dem Trägermodul angeordnet ist, durch deren Betätigung eine Veränderung eines Abstands zwischen den Anschlussstücken und/oder einer Länge der Anschlussstücke, die wiederum flexibel, z.B. als Balg oder Wellschlauch, ausgebildet sein können, bewirkbar ist, um die Anschlussstücke jeweils mit einem der Leitungsstutzen fluidleitend zu verbinden, wobei die Veränderung entlang der ersten Achse bewirkbar ist, und wobei vorzugsweise die erste Achse im Wesentlichen quer zu einer Erstreckungsrichtung der einen Fluidleitung orientiert ist.

Eine erfindungsgemäße Verbindungsanordnung umfasst wenigstens eine erfindungsgemäße Verbindungsvorrichtung und wenigstens eine Fluidleitung zum Zuführen und/oder Abführen des Fluids, welche Fluidleitung über das Trägermodul fluidleitend mit den Anschlussstücken verbunden ist.

Erfindungsgemäße, mittels eines Fluids temperierte Funktionsmodule, insbesondere Batteriemodule, welche Funktionsmodule jeweils zumindest einen Leitungsstutzen zum Einleiten und/oder Ausleiten des Fluids aufweisen, umfassen eine erfindungsgemäße Verbindungsanordnung, wobei wenigstens zwei Funktionsmodule in einem Abstand zueinander angeordnet sind, sodass die betreffenden Leitungsstutzen im Wesentlichen einander genau gegenüberliegend und entlang einer ersten Achse fluchtend angeordnet sind und in einen Bereich zwischen den Funktionsmodulen münden, wobei die Leitungsstutzen fluidleitend mittels der von der Verbindungsanordnung umfassten Verbindungsvorrichtung mit der Fluidleitung verbunden sind.

Wenn nachfolgend von "Batteriemodulen" die Rede ist, stehen diese exemplarisch für allgemeine Funktionsmodule, und die Erfindung ist grundsätzlich nicht auf eine Verwendung mit oder bei Batteriemodulen beschränkt, obgleich dies eine bevorzugte Verwendung darstellt.

Vorzugsweise sind alle fluidleitenden Komponenten im Rahmen der Erfindung aus einem metallischen Werkstoff, z.B. (Edel-)Stahl, gebildet, um eine hinreichend fluiddichte metallische Verrohrung zur Kontaktierung und Versorgung von Funktionsmodulen, vorzugsweise Batteriemodulen, mit einem Temperierfluid zur Temperierung der Module zu schaffen.

Darüber hinaus ist ein rein metallisches Konzept zumindest bezogen auf die Verrohrung zu bevorzugen, um im Falle der Beaufschlagung der Batterie (der Funktionsmodule) und der Fluidleitungen mit Feuer einen erhöhten Widerstand gegen Ausfall durch thermische Einwirkung zu bieten.

Im Besondern weist diese Verrohrung eine gegenüber dem Stand der Technik verringerte Anzahl bei der Montage zu fügender Schnittstellen auf, und ist zumindest partiell flexibel ausgestaltet, z.B. durch Zwischenschalten gewellter Abschnitte, um Form- und Lagetoleranzen auszugleichen. Weiterhin ist es im Zuge entsprechender Weiterbildungen der Erfindung eine intrinsische Eigenschaft der Verrohrung, dass diese durch elastische und plastische Verformung zumindest in Teilabschnitten von einem Zustand der Anlieferung, in dem sie bei der Montage in Position gebracht werden kann, in einen montierten Zustand überführt wird. Die dafür erforderlichen Verformungen werden vorzugsweise durch Bereiche mit relativ geringen Steifigkeiten (geometrisch und/oder werkstofflich) in der Verrohrung selbst und höchst vorzugsweise durch das Einbringen von geometrischen Wellen in bestimmten Bereichen ermöglicht. Die Sicherung gegen unbeabsichtigte Demontage wird vorzugsweise u.a. durch plastische Umformung im Bereich der Anschlussstücke sichergestellt.

Es wird im Zuge einer entsprechenden Ausgestaltung der Erfindung bzw. der Verbindungsanordnung weiterhin vorgeschlagen, zur Montage ein bevorzugt modular aufgebautes Trägermodul einzuführen, welches die Fluidleitungen relativ zu den Fluidanschlussstutzen (Leitungsstutzen) der Funktions- bzw. Batteriemodule positioniert, lagert und vorzugsweise durch eine von "oben", d.h. in positiver Z-Richtung angetriebene Kinematik(-Einrichtung) die Anschlussstutzen beiderseits des Trägermoduls mittels der Anschlussstücke fluiddicht kontaktiert und in montierter Position sichert. Hierbei sind die Anschlussstücke je nach Ausführung elastisch und plastisch deformierbar. Das wird vorzugsweise durch einen gewellten Bereich oder eine vollständig gewellte Ausgestaltung der Anschlusstücke, höchst vorzugsweise metallisch gewellt, erreicht.

Eine weitere Ausgestaltungsvariante sieht vor, die Fluidleitung(en) in mehrere (parallele) Stränge aufzuspalten und jeweils mit flexiblen (Leitungs-)Elementen oder entsprechenden -Abschnitten zu versehen. Wird in diese Einzelstränge jeweils ein Abzweig, vorzugweise in Form eines Gussteils oder einer umgeformten Aushalsung, eingebracht, so ist die Kontaktierung der Anschlussstutzen durch eine Lateralverschiebung der Einzelstränge (quer zur Z-Achse) möglich.

Das genannte Trägermodul kann aus zwei kongruenten (Trägermodul-)Grundteilen und einem Antrieb oder Getriebe gebildet sein bzw. diese Bestandteile umfassen. Die Trägermodul-Grundteile werden vorzugsweise in einem Gussverfahren, höchst vorzugsweise Spritzguss, hergestellt und ineinander gesteckt. Der bevorzugte Werkstoff zur Herstellung der Trägermodul-Grundteile ist, ohne Beschränkung, ein Kunststoff, höchst vorzugweise ein Polyamid. Es werden vorzugsweise mehrere Funktionen durch den Verbund der beiden Trägermodul-Grundteile abgebildet:
Die Grundteile können an ihrer den Funktionsmodulen zugewandten oder zuzuwendenden Seite eine Einführschräge mit Führung (Führungsschiene) und Einrastposition für die (batterieseitigen bzw. modulseitigen) Anschlussstutzten (Leistungsstutzen) aufweisen. Dieses Merkmal dient zur Positionierung und Fixierung des (Montage-)Trägermoduls relativ zu den batterieseitigen Anschlussstutzen bei einer Montage in negativer Z-Richtung.

Die Grundteile weisen bevorzugt Funktionsflächen für eine wechselseitige Fügung ineinander (Steckung) auf, welche so angeordnet und ausgeführt sein können, dass sich eine Linearführung zwischen zwei zusammengesteckten Grundteilen ausbildet. Diese Linearführung dient vorzugsweise zur Führung der Montagebälge bzw. Anschlussstücke bei der Kontaktierung der Anschlussstutzen.

Zur Lagerung der Fluidleitungen können in den Trägermodul-Grundteilen - je nach Ausgestaltungsvariante - Ausnehmungen vorgesehen sein, welche (ggf. elastisch vorgespannt) die Fluidleitungen oder Fluidleitungskomponenten formschlüssig umschließen.

Zur umformenden Montage der Verbindungsanordnung können die Modulträger-grundteile über einen Antrieb verfügen, der vorzugsweise aus einer auf der Linearführung abgebildeten Verzahnung und einem treibenden Zahnrad besteht, welches Zahnrad durch ein Werkzeug antreibbar ist. Das Zahnrad ist vorzugsweise durch eine formschlüssige Schnappverbindung an einem zentralen Fluidabzweig (Verzeigungselement) befestigt, der bei einer Ausgestaltung als ein zwischen den Anschlussstücken und/oder den Grundteilen angeordnetes Verzweigungselement ausgebildet sein kann, welches Verzweigungselement die Anschlussstücke fluidleitend miteinander verbindet. Dieses Verzweigungselement kann in einem urformenden, höchst vorzugsweise in einem Gussverfahren, hergestellt sein. Der Antrieb (durch ein Werkzeug) kann über einen Durchbruch im Fluidabzweig (Verzweigungselement) hindurch erfolgen.

Darüber hinaus kann das Zahnrad Funktionsflächen, vorzugsweise in Form von Wellenschultern, aufweisen, welche mit Funktionsflächen an den Grundteilen in Wirkverbindung stehen und über das so gebildete Funktionsflächenpaar die Verrohrung lagern sowie eine Translation in Y-Richtung bei der Montage erlauben.

Eine Variante des Antriebs zeichnet sich durch den Einsatz eines weiteren Zahnrades und einer Vorgelegewelle aus, welche die Achse des Werkzeugantriebs außerhalb des Fluidabzweig legt. Zusätzlich weist diese Variante den Vorteil einer Drehmoment-Weg-Wandlung (Getriebe) auf, sodass für die Montage der Anschlussstücke ein geringeres Drehmoment aufgewendet werden muss. Die Erfindung ist jedoch nicht hierauf beschränkt; insbesondere beim Einsatz einer maschinell unterstützen Montage kann ein reduzierter Weg mit erhöhtem Drehmoment einen zeitlichen Vorteil bei der Montage bieten. Das Übersetzungsverhältnis des Wandlers (Getriebes) lässt sich entsprechend anpassen.

Auch ist bei einer erfindungsgemäßen Variante der Einsatz eines Hypoidgetriebes möglich. Hierbei kann vorteilhafterweise durch das Verkippen der Achsen der Zahnräder zueinander der Antrieb durch das Werkzeug auch unter beengten Bauraumverhältnissen außerhalb der Einhüllenden des zentralen Abzweigteils erfolgen.

Der Antrieb bzw. die Kinematikeinrichtung ist bei einer bevorzugten Ausgestaltung der Erfindung, die vorzugsweise parallele Fluidleitungen umfasst, kurvengesteuert ausgeführt, vorzugweise über eine Nockenwelle, höchst vorzugsweise Doppelnockenwelle. Die Nocken dienen zur Verschiebung der Fluidleitungen, insbesondere in der Y-Richtung; sie umgreifen dabei optional im Bereich ihrer Stirnseiten Teile der Fluidleitungen und lagern dadurch diese Teile in Z-Richtung.

Die Trägermodul-Grundteile können weiterhin mit Funktionsflächen zur formschlüssigen Aufnahme von weiteren Leitungen oder Rohren durch Schnappverbindungen ausgestattet sein. Diese Funktionsflächen können in Teilflächen an den wechselseitig angeordneten Grundteilen aufgeteilt werden, um nur im Verbund bei korrekter Montage z.B. ein Einklippen der genannten weiteren Leitung(en) zu erlauben. Insbesondere lässt sich damit auch eine Sicherung/Sperre gegen unbeabsichtigte Demontage erreichen.

Sind an den Modulträger-Grundteilen darüber hinaus Stützstrukturen mit endständigen Funktionsflächen zur Lagerung der gesamten Baugruppe (Verbindungsanordnung) vorgesehen, kann auf zusätzliche Halter oder Fixierungen verzichtet werden, sofern die Funktionsflächen der Grundteile mit Funktionsflächen in der Umgebung, z.B. an den Funktionsmodulen, in Wechselwirkung treten. Diese Funktion kann durch eine formschlüssige Schnappverbindung oder eine Sicherung mit einem Keil (Schraube) ergänzt werden.

Eine andere Ausgestaltung sieht vor, die Modulträger-Grundteile mit Funktionsflächen auszustatten, die mit komplementären Flächen an einem Keil, der in vorzugsweise negativer Z-Richtung bewegt wird bzw. bewegbar ist, Funktionsflächenpaare bilden, wodurch der Kontaktierungsvorgang der Leitungsstutzen durch die Anschlussstücke durchgeführt wird, indem letztere bei der Bewegung des Keils definiert zu den Seiten verschoben werden. Hierbei ist eine Abstützung der Modulträgergrundteile in Z-Richtung während der Montage von Vorteil.

Weiterhin ist es im Rahmen der Erfindung möglich, die Montage der Anschlussstücke über deren Ausgestaltung als ein elastisch (durch Druck) vorgespannter Balg auszuführen. Zum Verbau einer erhöhten Anzahl an Wellen wird bevorzugt eine im Balg liegende Hülse (Hülsenelement) vorgeschlagen, die an einem Ende mit dem Balg stoffschlüssig verbunden ist und eine zylindrische Dichtfläche inklusive Einlaufschräge für den Gegenpart der Verbindung (Leitungsstutzen) bereitstellt. Darüber hinaus kann zur Erhöhung der mechanischen Vorspannung ein zusätzliches Federelement eingebracht werden, das die Anschlussstücke auf den jeweiligen Leitungsstutzen drückt. Das Federelement ist beispielsweise als Blattfeder ausgeführt, kann aber auch als Schraubenfeder ausgeführt innerhalb des Balges verortet sein und sich gegen das Gussabzweigteil (Verzweigungselement) sowie die Hülse abstützen. Dabei ist auch ein außerhalb des Balgs liegendes Federelement nicht ausgeschlossen.

Eine Fixierung der Verrohrung im mechanisch vorgespannten Zustand ist besonders vorteilhaft und kann beispielsweise über Schnappelemente, die endständig an Führungselementen angebracht sind, besonders einfach umgesetzt werden.

Eine weitere Ausgestaltungsvariante sieht vor, das insbesondere im Fahrzeug verbleibende (Grund-)Trägermodul entfallen zu lassen und die Fluidleitungen selbst mit Haltern zur Lagerung auszustatten. Zur Montage kann in dieser Variante ein spezielles (Greif-)Werkzeug vorgesehen sein, das zunächst optional die Fluidleitung mit davon abzweigenden Anschlussstücken aus einem Ladungsträger (Vorrat) greift, danach die flexiblen Elemente der Abzweige, d.h. die Anschlussstücke komprimiert, anschließend die Fluidleitung positioniert (inklusive Toleranzausgleich über weitere flexible Elemente in der Fluidleitung selbst), dann die flexiblen Elemente der Abzweige entspannt und zusätzlich plastisch bei der Kontaktierung der Leitungsstutzen umformt, im Anschluss die Anschlusstücke wieder in einen spannungsfreien Zustand rückfedern lässt (bis auf Eigenspannungen und durch etwaige Dichtelementreibung verbleibenden Spannungen) und schließlich die genannten Halter gegen die Umgebung (z.B. gegen die Funktionsmodule) fixiert, beispielsweise durch Verschrauben. Dann gibt das Werkzeug die Verrohrung wieder frei.

Weiterhin ist die Aufnahme der (flexiblen) Anschlussstücke in den Trägermodul-Grundteilen bei entsprechender Ausgestaltung ein wichtiger Gesichtspunkt, da die vorzugsweise formschlüssige Aufnahme zur Kraftübertragung für die plastische Verformung der Anschlussstücke und die Überwindung der Reibwiederstände bei der Fügung der Anschlussstücke überwunden werden muss. Diese Funktion kann in Weiterbildung der Erfindung ohne Beschränkung durch folgende Varianten erreicht werden:
Schnapphaken: Die Aufnahme wird in diesem Fall durch Schnapphaken mit Formschluss gebildet. Gefügt wird diese Verbindung bei der Montage der Modulträgergrundteile in Y-Richtung (quer zur Z-Richtung) mit anschließender elastischer Vorspannung des flexiblen Elements (Anschlussstück). Um eine Überlast des flexiblen Elements zu verhindern, kann eine innere Hülse (Hülsenelement) vorgesehen und derart ausgeführt sein, dass sie sich im zentralen Abzweigteil (Verzeigungselement) abstützen kann und das flexible Element entlastet.

Schiebeeinsatz: Ein solcher Schiebesitz kann zur formschlüssigen Aufnahme eines optional ausgeformten endständigen Bords der Anschlusstücke in Z-Richtung ausgeführt sein. Wenn mehrere parallele Anschlusstücke über das zentrale Verzweigungselement und den Antrieb (das zentrale Zahnrad) verbunden sind, lässt sich ein Ausgleiten des Bords aus dem Schiebeeinsatz verhindern.

Kralle: Es wird außerdem eine Variante vorgeschlagen, die sich durch einen an den Anschlusstücken ausgebildeten Bord auszeichnet, welcher Bord mit einer Übermaßpassung in eine Gegenkontur gefügt wird und in Richtung der Fügung verkippt. Bei einer umgekehrten Belastung stellt sich der optional geschlitzte Bord auf und verkrallt sich form- und reibschlüssig (kraftschlüssig) in der Gegenkontur. Vorzugsweise ist die Gegenkontur in einem Kunststoff und der Bord (wie das gesamte Anschlussstück) metallisch ausgeführt. Wird der Bord durch einen Schneidprozess, wie einen Stanzprozess, geometrisch hergestellt, ist es vorteilhaft, den Schneidgrat so zu stellen, dass eine Verkrallung unterstützt wird und sich dadurch eine besonders vorteilhafte Ausgestaltung ergibt.

Die Erfindung ermöglicht so eine vereinfachte Montage ohne Stücklung der Verrohrung, eine reduzierte Anzahl von Dichtstellen, das Schaffen einer metallischen Fluidleitung sowie die Reduzierung des erforderlichen Bauraums.

Folgende Ausgestaltungen haben sich als besonders vorteilhaft erwiesen:
Eine erste Weiterbildung des erfindungsgemäßen Verfahrens sieht vor, dass die Verbindungsanordnung entlang einer zweiten Achse quer zu der ersten Achse in den Bereich eingebracht wird. Vorzugsweise handelt sich bei der ersten Achse um die bereits erwähnte Y-Achse und bei der zweiten Achse um die ebenfalls bereits erwähnte Z-Achse. Auf diese Weise lässt sich die Montage vereinfachen.

Eine zweite Weiterbildung des erfindungsgemäßen Verfahrens sieht vor, dass zum Verändern des Abstands und/oder der Länge in Schritt d) eine Abstandsänderungseinrichtung vorhanden ist, die von außerhalb des Bereichs betätigt wird, wobei das Betätigen eine Translationsbewegung entlang einer zweiten Achse quer zu der ersten Achse oder eine Drehbewegung um eine zweite Achse quer zu der ersten Achse beinhaltet. Aufgrund der Betätigung von außerhalb des Bereichs ergibt sich wiederum eine vereinfachte Montage.

Eine dritte Weiterbildung des erfindungsgemäßen Verfahrens sieht vor, dass in Schritt d) der Abstand zwischen den Anschlussstücken geändert wird, indem d1) ein zwischen den Anschlussstücken angeordnetes nockenförmiges Element um die zweite Achse zwischen den Anschlussstücken gedreht wird; oder d2) ein keilförmiges Element entlang der zweiten Achse zwischen die Anschlussstücke eingeschoben wird; oder d3) eine den Abstand verändernde Getriebeanordnung betätigt wird. In allen genannten Fällen kann ohne größeren Aufwand die angestrebte Abstandsänderung erreicht werden.

Eine andere Weiterbildung des erfindungsgemäßen Verfahrens sieht vor, dass in Schritt d) die Länge der Anschlussstücke geändert wird, indem d4) ein die Länge veränderndes keilförmiges Element entlang der zweiten Achse in den Bereich zwischen den Funktionsmodulen eingeschoben wird; oder d5) eine die Länge verändernde Getriebeanordnung betätigt wird; oder d6) die Anschlussstücke vor Schritt c) zunächst komprimiert und in Schritt d) wieder entspannt werden, insbesondere mittels eines entsprechenden Greifwerkzeugs. In allen genannten Fällen kann ebenfalls ohne größeren Aufwand die angestrebte Längenänderung erreicht werden.

Als besonders vorteilhaft hat es sich erwiesen, wenn im Zuge einer bestimmten Ausgestaltung des erfindungsgemäßen Verfahrens in Schritt d) die Länge der Anschlussstücke plastisch geändert wird. Auf diese Weise ergibt sich eine automatische Sicherung der hergestellten Verbindung, weil die Anschlussstücke nicht oder kaum zurückfedern. Es können in Abwandlung dieser Ausgestaltung jedoch auch zunächst die Anschlussstücke nur elastisch und dann einem zweiten Schritt elastisch-plastisch verformt werden.

Noch eine andere Weiterbildung des erfindungsgemäßen Verfahrens sieht vor, dass zum Komprimieren der Anschlussstücke und zum Einbringen der Verbindungsanordnung ein Werkzeug vorgesehen ist, das optional die Verbindungsanordnung ergreift, die Anschlussstücke komprimiert, die Verbindungsanordnung positioniert, vorzugsweise inklusive Toleranzausgleich über flexible Leitungselemente in der Verbindungsanordnung, dann die Anschlussstücke entspannt und zusätzlich plastisch bei der Kontaktierung der Leitungsstutzen umformt, danach die Anschlussstücke in einen spannungsfreien Zustand, bis auf Eigenspannungen und die durch etwaige Dichtelementreibung verbleibenden Spannungen, rückfedern lässt, und schließlich optional die Verbindungsanordnung freigibt. Eine solche Ausgestaltung kann - mit Ausnahme des genannten Werkzeugs - praktisch vollständig ohne zusätzliche Bauteile, wie Trägermodul oder dergleichen, auskommen.

Außerdem kann in Weiterbildung der erfindungsgemäßen Verbindungsvorrichtung noch vorgesehen sein, dass die Anschlussstücke als flexible Metallbälge mit einem gewellten Abschnitt ausgebildet sind oder solche Metallbälge umfassen, welche Metallbälge vorzugsweise mechanisch vorgespannt sind, insbesondere mittels eines zusätzlichen Federelements. Derartige Anschlussstücke sind besonders stabil und versprechen eine lange Standzeit entsprechend ausgebildeten Verbindungsvorrichtung.

Bei einer anderen Weiterbildung der erfindungsgemäßen Verbindungsvorrichtung kann vorgesehen sein, dass die Anschlussstücke ein Hülsenelement umfassen, das für eine fluidleitende Verbindung mit einem Leitungsstutzen ausgebildet und vorgesehen ist, insbesondere durch Vorsehen einer Einführschräge oder eines Einführradius. Auf diese Weise werden die fluidleitenden Eigenschaften der Anschlussstücke verbessert. Außerdem kann das Hülsenelement zu einer Stabilisierung der Verbindungsvorrichtung beitragen.

Eine besondere Weiterbildung der erfindungsgemäßen Verbindungsvorrichtung sieht vor, dass das Trägermodul zwei beweglich miteinander verbundene (z.B. ineinander gesteckte) Grundteile aufweist, die jeweils eines der Anschlussstücke halten oder aufnehmen, und dass a) die Kinematikeinrichtung ein zwischen den Anschlussstücken und/oder den Grundteilen angeordnetes nockenförmiges Element umfasst, welches Element um eine zweite Achse drehbar an dem Trägermodul gelagert ist, sodass über eine Drehung des Elements die Veränderung des Abstands zwischen den Anschlussstücken bewirkbar ist; oder dass b) die Kinematikeinrichtung ein zwischen den Anschlussstücken und/oder den Grundteilen angeordnetes keilförmiges Element umfasst, welches Element entlang einer zweiten Achse bewegbar an dem Trägermodul gelagert ist, sodass über eine Bewegung des Elements die Veränderung des Abstands zwischen den Anschlussstücken bewirkbar ist. Die genannte zweite Achse steht hierbei bevorzugt senkrecht zu der ersten Achse. Es wurde bereits darauf hingewiesen, dass es sich bei der ersten Achse um die Y-Achse und bei der zweiten Achse um die Z-Achse handeln kann.

Noch eine andere Weiterbildung der erfindungsgemäßen Verbindungsvorrichtung sieht vor, dass die (Trägermodul-) Grundteile jeweils wenigstens einen Anschluss für eine Fluidleitung aufweisen, welcher Anschluss mit dem betreffenden Anschlussstück in fluidleitender Verbindung steht. Besonders bevorzugt weisen die genannten Grundteile zwei entlang einer Achse fluchtende Anschlüsse für eine Fluidleitung auf, und das Anschlussstück zweigt nach Art des Buchstabens "T" seitlich hiervon ab.

Außerdem kann in Weiterbildung der erfindungsgemäßen Verbindungsvorrichtung noch vorgesehen sein, dass das Trägermodul wenigstens zwei beweglich miteinander verbundene Grundteile aufweist, die jeweils eines der Anschlussstücke halten oder aufnehmen, sowie ein zwischen den Anschlussstücken und/oder den Grundteilen angeordnetes Verzweigungselement, welches Verzweigungselement die Anschlussstücke fluidleitend miteinander verbindet, wobei die Kinematikeinrichtung eine Getriebeanordnung umfasst, durch deren Betätigung die Veränderung der Länge der Anschlussstücke bewirkbar ist, indem die Grundteile voneinander wegbewegt werden. Das genannte Verzweigungselement, welches als Gussteil hergestellt sein kann, dient dabei vorzugsweise als Abstützung für die weiter oben genannte Hülse (Hülsenelement).

Im Zuge einer bevorzugten Weiterbildung dieser Ausgestaltung der erfindungsgemäßen Verbindungsvorrichtung kann die Getriebeanordnung wenigstens ein erstes Zahnrad und wenigstens eine Zahnstange aufweisen, die mit dem ersten Zahnrad in Eingriff steht, welches erste Zahnrad um eine zweite Achse drehbar ist, welche zweite Achse bevorzugt senkrecht zu der ersten Achse orientiert ist, während die Zahnstange parallel zu den Anschlussstücken orientiert ist. Auf diese Weise kann durch Betätigen des ersten Zahnrads leicht eine Längenänderung der Anschlussstücke bewirkt werden.

Bei entsprechender Weiterbildung der erfindungsgemäßen Verbindungsvorrichtung kann vorgesehen sein, dass die Getriebeanordnung durch das Verzweigungselement hindurch betätigbar ist.

Alternativ kann jedoch auch vorgesehen sein, dass bei entsprechender Weiterbildung der erfindungsgemäßen Verbindungsvorrichtung die Getriebeanordnung zusätzlich wenigstens ein zweites Zahnrad aufweist, vorzugsweise auf einer Vorgelegewelle, welches zweite Zahnrad mit dem ersten Zahnrad in Eingriff steht. Auf diese Weise lässt sich insbesondere vermeiden, dass das Verzweigungselement eine Öffnung bzw. einen Durchbruch für ein Werkzeug zum Betätigen der Getriebeanordnung aufweisen muss. Außerdem kann durch Vorsehen einer entsprechenden Übersetzung eine erleichterte Betätigung bzw. eine angepasste Längenänderung bewirkt werden.

Eine besonders vorteilhafte Ausgestaltung der erfindungsgemäßen Verbindungsvorrichtung sieht vor, dass die Grundteile mit Funktionsflächen zur formschlüssigen Aufnahme, insbesondere durch Schnappverbindungen, für weitere Leitungen oder Rohre ausgestattet sind, welche Funktionsflächen vorzugsweise in Teilflächen an den jeweiligen Grundteilen aufgeteilt sind, um nur im Verbund und bei korrekter Montage eine Aufnahme der weiteren Leitungen oder Rohre zu erlauben. Insbesondere lässt sich damit auch eine Sicherung/Sperre gegen unbeabsichtigte Demontage erreichen.

Noch eine besonders vorteilhafte Ausgestaltung der erfindungsgemäßen Verbindungsvorrichtung sieht vor, dass die Grundteile an einander abgewandten Außenseiten der Grundteile Stützstrukturen mit endständigen Funktionsflächen zur Lagerung und/oder Positionierung an den Funktionsmodulen, insbesondere im Bereich der Leitungsstutzen, aufweisen. Speziell diese Funktion kann zusätzlich durch einen formschlüssige Schnappverbindung oder Sicherung mit einem Keil (Schraube) ergänzt werden.

Ganz besonders vorteilhaft ist es, wenn in Weiterbildung der erfindungsgemäßen Verbindungsvorrichtung die Anschlussstücke an ihrem einen Ende mit den Grundteilen kraft- oder formschlüssig verbunden sind, vorzugsweise indem
- die Grundteile eine Anordnung von Schnapphaken aufweisen, die mit einem endständigen Bord eines Anschlussstücks formschlüssig zusammenwirken, vorzugsweise gemeinsam mit einem endständigen Flansch des weiter oben erwähnten Hülsenelements;
- die Grundteile eine Einführstruktur aufweisen, in die ein endständiger Bord jeweils eines Anschlussstücks eingeführt oder einführbar ist, vorzugsweise in Richtung der weiter oben genannten zweiten Achse, welcher Schiebeeinsatz mit dem endständigen Bord eines Anschlussstücks formschlüssig zusammenwirkt, vorzugsweise gemeinsam mit einem endständigen Flansch des Hülsenelements;
- die Anschlussstücke jeweils einen endständigen, optional geschlitzten Bord aufweisen, welcher Bord mit einer Übermaßpassung in eine Gegenkontur an einem betreffenden Grundteil gefügt und in Richtung der Fügung verkippt ist, sodass sich bei einer umgekehrten Belastung der optional geschlitzte Bord aufstellt und sich form und reibschlüssig in der Gegenkontur verkrallt, welche Gegenkontur vorzugsweise in einem Kunststoff ausgebildet ist, während der Bord vorzugsweise metallisch ausgeführt ist. Wird der Bord durch einen Schneidprozess, wie einem Stanzprozess geometrisch hergestellt, so ist es vorteilhaft, den Schneidgrat so zu stellen, dass eine Verkrallung unterstützt wird.

Außerdem kann in Weiterbildung der erfindungsgemäßen Verbindungsvorrichtung vorgesehen sein, dass die Anschlussstücke an ihrem anderen Ende mit dem Verzweigungselement vorzugsweise stoffschlüssig verbunden sind, insbesondere durch Verschweißen. Auf diese Weise lässt sich eine sichere, fluiddichte und dauerhafte Verbindung erreichen.

In Weiterbildung der mittels eines Fluids temperierten Funktionsmodule kann schließlich noch vorgesehen sein, dass die Verbindungsanordnung wenigstens zwei Fluidleitungen umfasst, eine zum Zuführen und eine zum Abführen des Fluids, und die Funktionsmodule jeweils zumindest zwei Leitungsstutzen aufweisen, von denen einer mit der Fluidleitung zum Zuführen und einer mit der Fluidleitung zum Abführen des Fluids verbunden ist. Auf diese Weise lässt sich sowohl frisches Temperierfluid den Funktionsmodulen zuführen als auch "verbrauchtes" bzw. abgekühltes oder erwärmtes Temperierfluid von den Funktionsmodulen abführen, sodass ein Temperierkreislauf ausbildbar ist.

Weitere Eigenschaften und Vorteile der Erfindung ergeben sich aus der nachfolgenden Beschreibung von Ausführungsbeispielen anhand der Zeichnung.
Figur 1 zeigt eine erste Ausgestaltung der erfindungsgemäßen Verbindungsanordnung mit einer erfindungsgemäßen Verbindungsvorrichtung;
Figur 2 zeigt eine zweite Ausgestaltung der erfindungsgemäßen Verbindungsanordnung mit einer erfindungsgemäßen Verbindungsvorrichtung;
Figur 3 zeigt detailliert eine Verbindungsvorrichtung gemäß Figur 2;
Figur 4 zeigt eine dritte Ausgestaltung der erfindungsgemäßen Verbindungsanordnung mit einer erfindungsgemäßen Verbindungsvorrichtung;
Figur 5 zeigt detailliert eine Verbindungsvorrichtung gemäß Figur 4;
Figur 6 zeigt eine Abwandlung der Verbindungsvorrichtung gemäß Figur 4 und Figur 5;
Figur 7 zeigt eine vierte Ausgestaltung der erfindungsgemäßen Verbindungsanordnung mit einer erfindungsgemäßen Verbindungsvorrichtung;
Figur 8 zeigt eine fünfte Ausgestaltung der erfindungsgemäßen Verbindungsanordnung mit einer erfindungsgemäßen Verbindungsvorrichtung;
Figur 9 zeigt eine sechste Ausgestaltung der erfindungsgemäßen Verbindungsanordnung;
Figur 10 zeigt die Verbindungsanordnung aus Figur 9 mitsamt einem zugehörigen (Montage-) Werkzeug;
Figur 11 zeigt ein Detail einer weiteren Ausgestaltung der erfindungsgemäßen Verbindungsanordnung;
Figur 12 zeigt ein Detail einer anderen Ausgestaltung der erfindungsgemäßen Verbindungsanordnung;
Figur 13 zeigt ein Detail noch einer anderen Ausgestaltung der erfindungsgemäßen Verbindungsanordnung; und
Figur 14 zeigt ein Detail wieder einer anderen Ausgestaltung der erfindungsgemäßen Verbindungsanordnung.

Gleiche Bezugszeichen markieren in allen Figuren gleiche oder zumindest gleich wirkende Elemente.

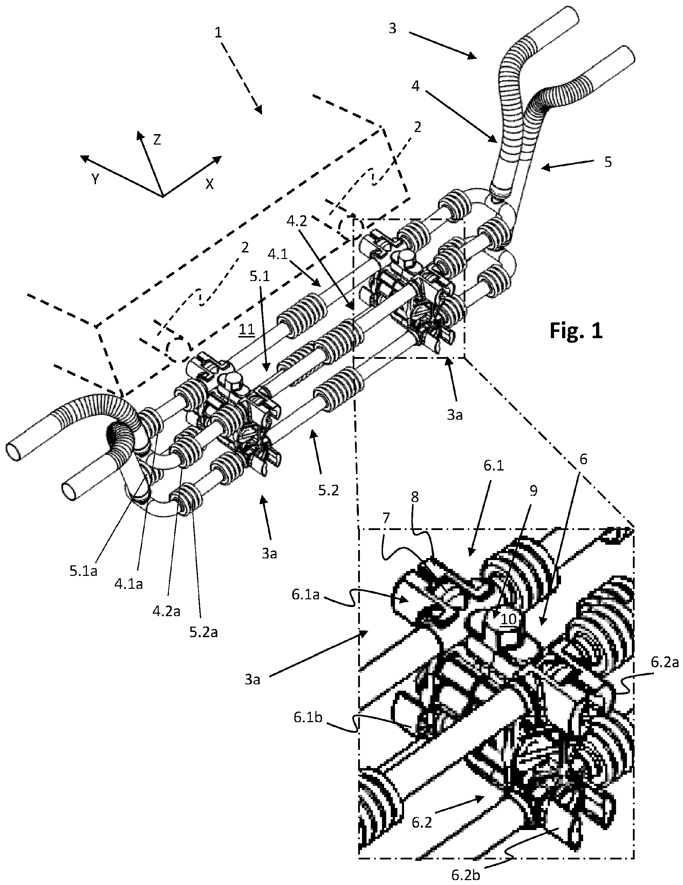

In Figur 1 ist bei Bezugszeichen 1 ein sogenanntes Funktionsmodul schematisch dargestellt, bei welchem Funktionsmodul es sich insbesondere um eine Batteriezelle handeln kann, insbesondere für den Elektroantrieb eines Kraftfahrzeugs. Das Funktionsmodul bzw. die Batteriezelle 1 weist exemplarisch zwei Anschlussstutzten bzw. Leitungsstutzen 2 auf, die vorliegend beispielsweise zum Einleiten eines Temperierfluids dienen können. Das Funktionsmodul 1 kann weitere Leitungsstutzen aufweisen, insbesondere zum Ausleiten des Temperierfluids. Dies ist in Figur 1 aus Gründen der Übersichtlichkeit nicht dargestellt. Außerdem können weitere (gleiche) Funktionsmodule 1 vorhanden sein.

Weiterhin dargestellt ist in Figur 1 eine Leitungsanordnung 3, die sich aus mehreren einzelnen Bestandteilen zusammensetzt: grundsätzlich existiert zunächst eine erste Fluidleitung zum Zuführen des Temperierfluids, welche erste Fluidleitung mit dem Bezugszeichen 4 versehen ist. Weiterhin existiert eine zweite Fluidleitung 5 zum Abführen des Temperierfluids. Die erste Fluidleitung 4 und die zweite Fluidleitung 5 weisen in einem mittleren Bereich der Leitungsanordnung 3 jeweils zwei parallel verlaufende Stränge 4.1, 4.2; 5.1, 5.2 auf, in welchem Bereich sie außerdem jeweils eine Anzahl von flexibel ausgebildeten, gewellten Leitungsabschnitten aufweisen, von denen aus Gründen der Übersichtlichkeit in Figur 1 nur einige wenige mit dem Bezugszeichen 4.1a, 4.2a; 5.1a, 5.2a explizit bezeichnet sind. Die Fluidleitungen 4, 5 sind vorzugsweise in einem metallischen Werkstoff, vorzugsweise Edelstahl, ausgebildet.

Bevorzugt sind auf beiden Seiten der Leitungsanordnung 3 Funktionsmodule 1 angeordnet, was in Figur 1 aus Gründen der Übersichtlichkeit nicht dargestellt ist.

Die Leitungsanordnung 3 weist außerdem zwei Verbindungsvorrichtungen 3a mit jeweils einem Trägermodul 6 auf, für deren Beschreibung auf die in Figur 1 enthaltene Detailvergrößerung einer der Verbindungsvorrichtungen 3a verwiesen werden darf. Die Trägermodule 6 sind vorzugsweise in Kunststoff ausgebildet. Jedes Trägermodul 6 umfasst zwei Grundteile 6.1, 6.2, die in Richtung der Achse Y beweglich miteinander verbunden, insbesondere ineinandergesteckt, sind. Dabei umfasst jedes der Grundteile 6.1, 6.2 zwei T-förmige Verbindungsstücke 6.1a, 6.1b; 6.2a, 6.2b, über die Abschnitte der Fluidleitungen 4, 5 fluidleitend mit jeweils einem sich insbesondere in Y-Richtung erstreckenden Anschlussstück 7 verbunden ist, welche Anschlussstücke 7 bevorzugt als T-förmige Guss-Stücke inkl. innenliegender Dichtung (nicht gezeigt) ausgebildet sind, welche jeweils mit der ersten Fluidleitung 4 oder der zweiten Fluidleitung 5 bzw. deren parallel verlaufenden Strängen 4.1, 4.2; 5.1, 5.2 verschweißt oder verlötet sind. In Figur 1 ist aus Gründen der Übersichtlichkeit nur eines der Anschlussstücke 7 explizit bezeichnet.

Die Anschlussstücke 7 sind jeweils insbesondere in einem Schenkel 8 der T-förmigen Verbindungsstücke 6.1a, 6.1b; 6.2a, 6.2b angeordnet, welcher Schenkel 8 derart (geschlitzt) ausgebildet ist, dass er auf einen der Leitungsstutzen 2 aufgeschoben werden kann. Zu diesem Zweck weisen die Verbindungsvorrichtungen 3a jeweils ein nockenförmiges Element 9 auf, mit dessen Hilfe die beiden Grundteile 6.1, 6.2 in Richtung der Y-Achse bzw. entgegen dieser voneinander wegbewegt werden können, wenn ein (automatischer) Werker einen an dem nockenförmigen Element 9 vorhandenen Antrieb 10, insbesondere in Form eines Sechskant-Schraubenkopfes, mit einem geeigneten Werkzeug betätigt. Die Anschlussstücke 7 treten dann fluiddicht mit den Leitungsstutzen 2 in Verbindung, worauf weiter unten noch genauer eingegangen wird. Die flexiblen Leitungsabschnitte 4.1a, 4.2a; 5.1a, 5.2a der Fluidleitungen 4, 5 sorgen für die erforderliche Beweglichkeit in Y-Richtung.

Zur Montage wird die Leitungsanordnung 3 vorzugsweise in Richtung der negativen Z-Achse in einen Bereich 11 zwischen mehreren Funktionsmodulen 1 eingebracht, sodass die Schenkel 8 bzw. die Anschlussstücke 7 in Richtung der Y-Achse mit den Leitungsstutzen 2 fluchten. Dann wird der Antrieb 10 bzw. das nockenförmigen Element 9 betätigt, um die Anschlussstücke 7 mit den Leitungsstutzen 2 in Verbindung zu bringen. Dabei wird insbesondere ein Abstand (in der Y-Richtung) zwischen den Anschlussstücken 7 verändert.

Auf diese Weise ergibt sich ein Verfahren zum fluidleitenden Verbinden von mittels eines Fluids temperierten Funktionsmodulen 1, insbesondere Batteriemodulen, bei dem wenigstens zwei Funktionsmodule 1 (von denen in Figur 1 nur eines gezeigt ist) in einem Abstand zueinander derart angeordnet werden, dass die betreffenden Leitungsstutzen 2 im Wesentlichen einander genau gegenüberliegend und entlang einer ersten Achse, der Y-Achse, fluchtend angeordnet sind und in einen Bereich 11 zwischen den Funktionsmodulen 2 münden. Dann wird eine zumindest teilweise flexible, vormontierten Verbindungsanordnung 3 in den Bereich 11 zwischen den Funktionsmodulen 1 eingebracht, welche Verbindungsanordnung 3 wenigstens eine Fluidleitung 4, 5 zum Zuführen und/oder Abführen des Fluids und wenigstens zwei von der Fluidleitung oder jeweils von einer der Fluidleitungen abgehende fluidleitende Anschlussstücke 7 aufweist, derart, dass die Anschlussstücke 7 entlang der ersten Achse (Y) jeweils mit einem der Leitungsstutzen 2 fluchten, wie in Figur 1 für die beiden dargestellten Leitungsstutzen 2 gezeigt. Anschließend wird ein Abstand zwischen den Anschlussstücken 7 entlang der ersten Achse (Y) verändert, so dass die Anschlussstücke 7 jeweils einen der Leitungsstutzen 2 fluidleitend kontaktieren.

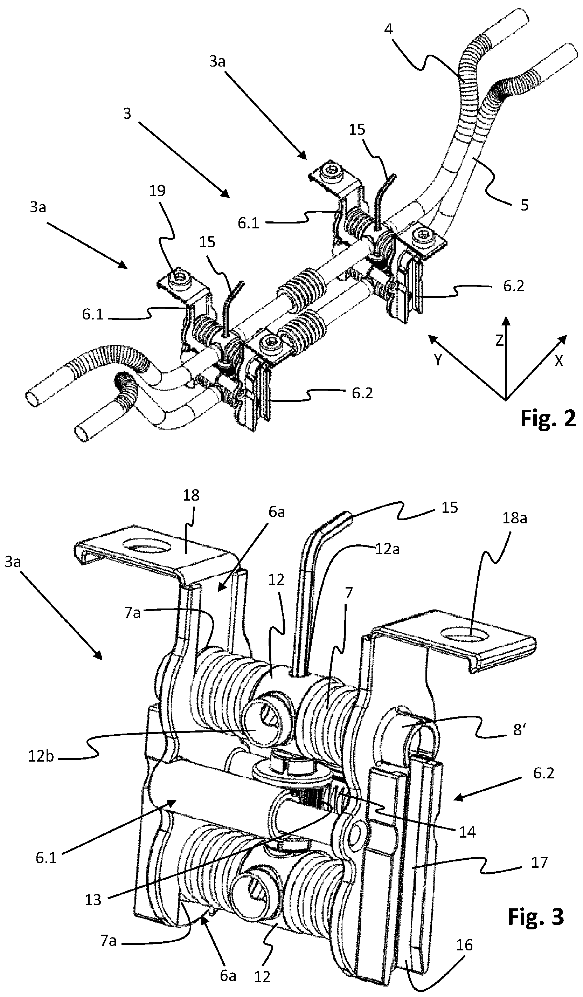

In Figur 2 ist eine alternative Ausgestaltung der Verbindungsanordnung 3 gezeigt; auf eine Darstellung der Funktionsmodule 1 wurde aus Gründen der Übersichtlichkeit verzichtet. Es wird nachfolgend nur auf die wesentlichen Unterschiede der Verbindungsanordnung 3 verglichen mit der Verbindungsanordnung aus Figur 1 näher eingegangen.

Die Fluidleitungen 4, 5 sind zunächst unverzweigt, weisen jedoch bei Bezugszeichen 12 sogenannte Verzweigungselemente auf, von denen jeweils zwei Anschlussstücke 7 in Richtung der Y-Achse abzweigen. Die Anschlussstücke 7 sind hier bevorzugt als Metallbälge ausgebildet. Wie man insbesondere der Detaildarstellung einer der Verbindungsvorrichtungen 3a in Figur 3 entnimmt, ist in der Z-Richtung zwischen zwei Verzweigungselementen 12 eine Kinematikeinrichtung mit einem Zahnrad 13 angeordnet, das mit zwei in Y-Richtung orientierten Zahnstangen 14 in Eingriff steht, die an jeweils einem der spiegelbildlich ausgebildeten Grundteile 6.1, 6.2 ausgebildet sind.

Die Zahnstangen 14 sind hohl in Form von Hülsen ausgebildet und realisieren so bei jedem der Grundteile 6.1, 6.2 eine Führungsfunktion für jeweils eine Führungsstange 14', die an dem jeweils anderen Grundteil 6.1, 6.2 angeordnet und in die Zahnstange 14 eingesteckt ist. Mittels dieser Führungsstangen 14' werden zum einen die Grundteile 6.1 und 6.2 zueinander ausgerichtet und geführt. Andererseits sorgen vorzugsweise an den Führungsstangen 14' endständig angebrachte Schnappverbindungen oder dergleichen (in der Figur nicht erkennbar) für eine Arretierung der Verbindungsvorrichtung 3a in einem vormontierten Auslieferungszustand (mit komprimiertem Metallbalg bzw. Anschlussstück 7).

Die Verzweigungselemente 12 sind vorzugsweise in einem metallischen Gussmaterial ausgebildet und weisen (zumindest das in Z-Richtung obere Verzweigungselement) einen Durchbruch 12a auf, durch den hindurch das Zahnrad 13 mit einem geeigneten Werkzeug, hier einem Innensechskant-Schlüssel 15, betätigt werden kann, um die Grundteile 6.1,6.2 in der Y-Richtung voneinander zu entfernen, wodurch die Anschlussstücke 7 verlängert und mit den Leitungsstutzen (vergleiche Figur 1) in Verbindung gebracht werden können. Die Anschlussstücke 7 sind vorzugsweise stoffschlüssig mit den Verzweigungselementen 12 verbunden. Die Verzweigungselemente 12 weisen Anschlussstutzen 12b für die Fluidleitungen 4, 5 auf.

An ihren Außenseiten besitzen die Grundteile 6.1, 6.2 Funktionsflächen, die eine Einführschräge 16 und eine Führung 17 zum Aufschieben auf die Leitungsstutzen (vergleiche Figur 1) ausbilden. Der Einführschräge 16 gegenüber liegend weisen die Grundteile 6.1, 6.2 eine nach außen gerichtete Abwinkelung 18 mit einem Durchbruch 18a auf, die zur Fixierung an den Funktionsmodulen dienen kann, beispielsweise mittels einer Schraube 19, vergleiche Figur 2.

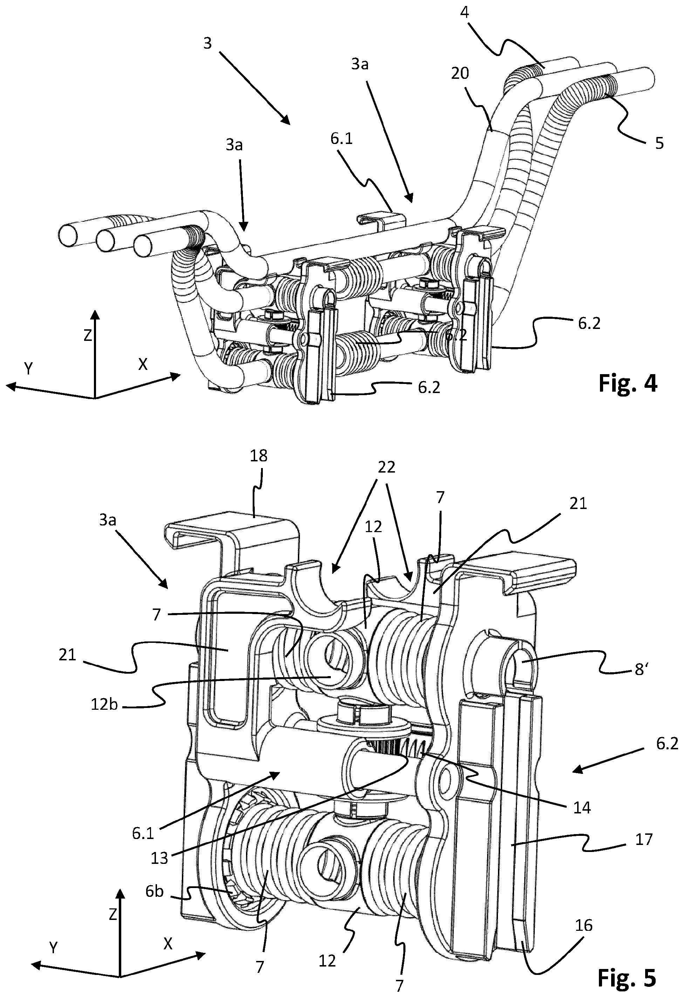

Das Zahnrad 13 übernimmt bei der gezeigten Ausgestaltung (vgl. auch weiter unten Figur 5) neben seiner Antriebsfunktion noch weitere Funktionen: Durch eine Schnapphakenverbindung oder dergleichen zu den darüber und darunter angeordneten Verzweigungselementen 12 und eine Abstützung an den Zahnstangen 14 mittels jeweils einer ausgeformten Bundfläche 13a oben und unten wird die gesamte Verbindungsvorrichtung 3a stabilisiert und bildet mit den Abwinklungen 18 zusammen eine tragende Funktion für die Fluidleitungen 4, 5.

Die Anschlussstücke 7 weisen einen endständigen Bord 7a auf, mit dem sie formschlüssig in einem jeweils zugehörigen Einschub 6a gehalten sind, der an den Grundteilen 6.1, 6.2 ausgebildet ist.

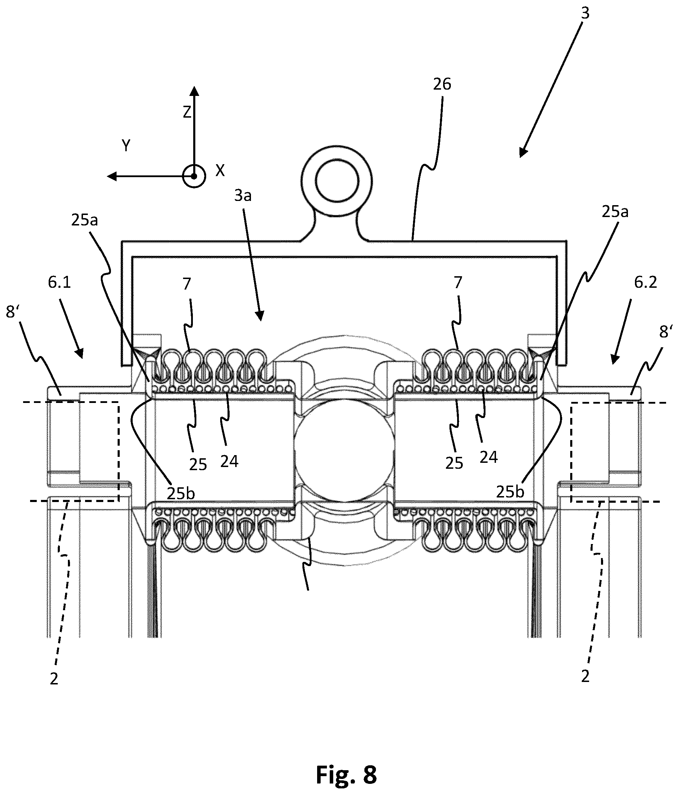

Die Grundteile 6.1, 6.2 weisen bei Bezugszeichen 8' geschlitzte Vorsprünge auf, deren Funktion den weiter oben beschriebenen Schenkeln 8 entspricht. Die Vorsprünge 8' öffnen in Richtung der Führungen 17, sodass die Leitungsstutzen (vergleiche Figur 1) in die Vorsprünge 8' eingeführt und innerhalb der Vorsprünge 8' aufgenommen werden können (vergleiche auch Figur 8).

Somit illustrieren die Figuren 2 und 3 ein Verfahren zum fluidleitenden Verbinden von mittels eines Fluids temperierten Funktionsmodulen, insbesondere Batteriemodulen, bei dem erreicht wird, dass die Anschlussstücke 7 durch Verändern einer Länge der Anschlussstücke 7 entlang der ersten Achse (Y) jeweils einen der Leitungsstutzen 2 (vergleiche Figur 1) fluidleitend kontaktieren.

In den Figuren 4 und 5 ist eine gegenüber den Figuren 2 und 3 leicht abgewandelte Ausgestaltung gezeigt. Es sei nur auf die wesentlichen Unterschiede näher eingegangen.

In Figur 4 ist eine weitere Fluidleitung 20 dargestellt, die durch Haltearme 21 gelagert ist, welche Haltearme 21 Lagerschalen 22 für die weitere Fluidleitung 20 aufweisen, welche Lagerschalen 22 fluchten, wenn sich die Grundteile 6.1,6.2 in ihrem voneinander entfernten Montagezustand befinden. Die weitere Fluidleitung 20 kann als Sicherungseinrichtung in der Z-Richtung fungieren.

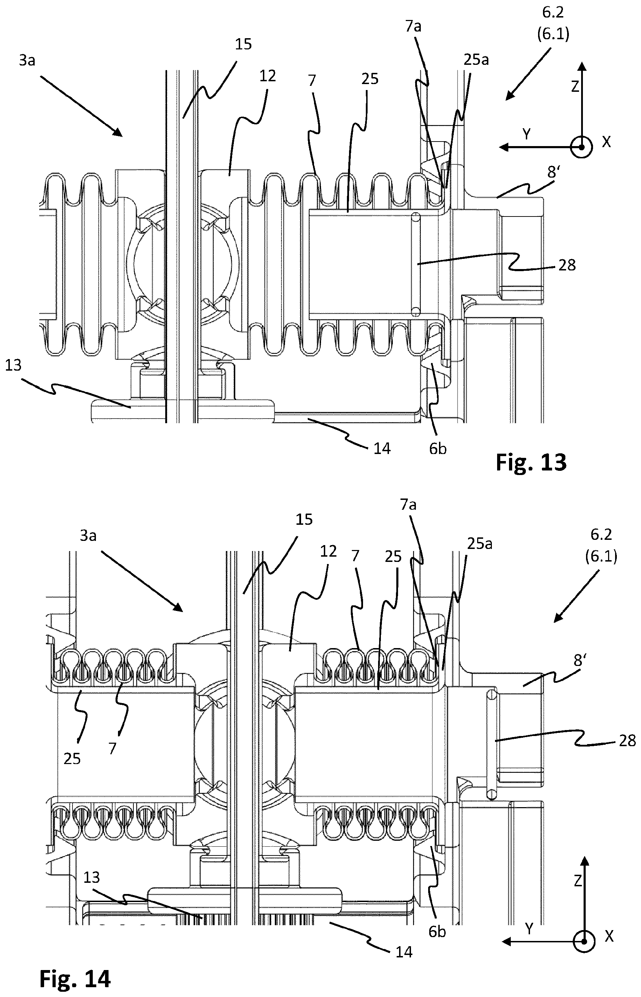

Ein weiterer Unterschied zwischen den Figuren 4 und 5 gegenüber den Figuren 2 und 3 besteht in der Fixierung der Anschlussstücke 7 an den Grundteilen 6.1, 6.2. Zu diesem Zweck weisen die Grundteile 6.1, 6.2 eine Anzahl von Schnapphaken 6b auf, worauf weiter unten anhand von Figur 13 und 14 noch genauer eingegangen wird.

Zum Verbinden der Anschlussstücke 7 mit den Leitungsstutzen (vergleiche Figur 1) wird entsprechend den Figuren 2 und 3 vorgegangen. Anschließend wird die weitere Fluidleitung 20 in die Lagerschalen 22 eingesetzt bzw. eingeklipst. Sie kann als Montagesicherung dienen.

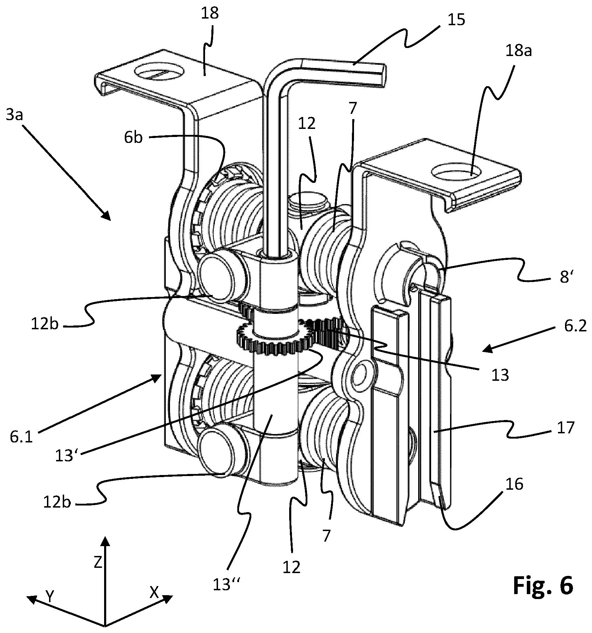

In Figur 6 ist eine Weiterbildung der Ausgestaltung gemäß den Figuren 2 bis 5 dargestellt. Hier umfasst die Kinematikeinrichtung ein weiteres Zahnrad 13', welches auf einer Vorgelegewelle 13" angeordnet ist, sodass das Werkzeug 15 nicht mehr durch das Verzweigungselement 12 eingeführt werden muss. Außerdem kann auf diese Weise eine gewünschte Übersetzung (Untersetzung) realisiert werden, wenn die Zahnräder 13, 13' geeignet aufeinander abgestimmt sind. Vorzugsweise ist die Vorgelegewelle 13" in der gezeigten Art und Weise an den Anschlussstutzten 12b gelagert.

Die Fixierung der Anschlussstücke 7 an den Grundteilen 6.1, 6.2 erfolgt in der Ausgestaltung gemäß Figur 6 analog zu der Ausgestaltung gemäß den Figuren 4 und 5 über Schnapphaken 6b.

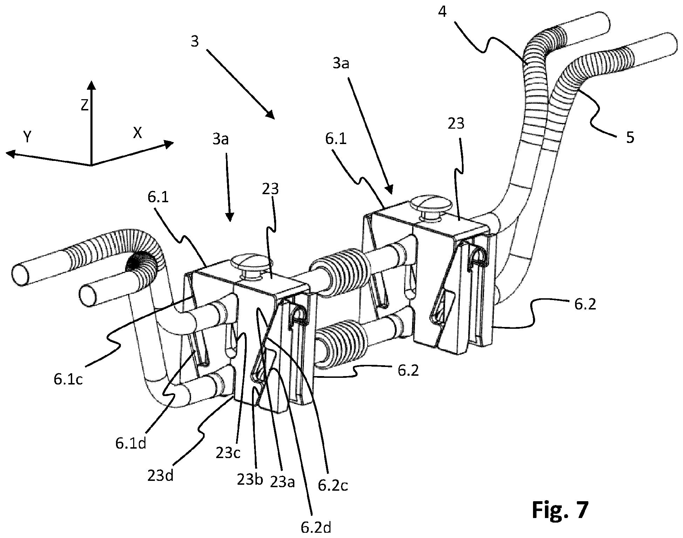

In Figur 7 ist eine grundlegend andere Ausgestaltung der Verbindungsvorrichtungen 3a gezeigt. Zwar entspricht die Ausgestaltung und Anordnung der Fluidleitungen 4, 5 grundsätzlich derjenigen in Figur 2, jedoch erfolgt die Einwirkung auf die (in Figur 7 nicht erkennbaren Anschlussstücke) nicht mittels Zahnrad und Zahnstange - wie bei den Ausgestaltungen gemäß den Figuren 2 bis 5 -, sondern über ein (doppelt) keilförmiges Element 23, dass entlang der zweiten Achse (-Z-Richtung) zwischen die (nicht erkennbaren) Anschlussstücke bzw. zwischen die Grundteile 6.1, 6.2 eingeschoben wird, um auf diese Weise die Grundteile 6.1, 6.2 in Richtung der Y-Achse voneinander zu entfernen und für eine Verlängerung der Anschlussstücke zu sorgen, welche Anschlussstücke grundsätzlich gemäß der Ausgestaltung in Figur 3 oder der Ausgestaltung in Figur 5 an/in den Grundteilen 6.1, 6.2 fixiert sein können.

Speziell weist das keilförmige Element 23 zwei Schrägen 23a und 23b auf, die mit jeweils komplementären Schrägen 6.1c/d, 6.2c/d an den Grundteilen 6.1, 6.2 zusammenwirken. Das keilförmige Element 23 weist außerdem zwei Ausnehmungen 23c, 23d auf, die einen Durchtritt der Fluidleitungen 4, 5 ermöglichen. Die eine der Ausnehmungen 23c ist als Langloch ausgebildet, um eine Bewegung des keilförmigen Elements 23 in der -Z-Richtung zu ermöglichen. Die Fluidleitungen 4, 5 können in diesem Bereich entsprechend einer Formgebung der Ausnehmungen 23c, 23d abgeflacht ausgebildet sein, wie dargestellt.

In Figur 7 ist die abgesenkte Stellung der keilförmigen Elemente 23 gezeigt, in der die Anschlussstücke zum Kontaktieren der Leitungsstutzen (vergleiche Figur 1) in der +/-Y-Richtung verformt (verlängert) sind.

An ihren Außenseiten sind die Grundteile 6.1, 6.2 vorzugsweise so ausgestaltet (Einführschräge 16, Führung 17, ...), wie weiter oben anhand von Figur 3 ausführlich beschrieben, worauf verwiesen werden darf.

In Figur 8 ist ein teilweiser Querschnitt durch eine weitere Ausgestaltung gezeigt, bei der die balgartigen Anschlussstücke 7 radial innenliegend jeweils mit einem Federelement 24 und einem Hülsenelement 25 versehen sind. Bei dem Federelement 24 handelt es sich vorzugsweise um eine Schraubenfeder. Das Hülsenelement 25 weist einen endständigen Bord oder Flansch 25a auf. Die Anschlussstücke 7 sind innen mit dem Verzweigungselement 12 und außen mit dem Bord 25a (stoffschlüssig) verbunden.

Figur 8 ist ein gestauchter bzw. komprimierter Zustand der Anschlussstücke 7 gezeigt, der mittels eines geeigneten Haltewerkzeugs 26 gehalten wird, welches Werkzeug an geeigneten Vorsprüngen der Grundteilen 6.1, 6.2 angreift. Die Federelemente 24 stützen sich einerseits an dem Verzweigungselement 12 und andererseits an dem Bord 25a ab. Wird das Werkzeug 26 entfernt, so drücken die Federelemente 24 die Hülsenelement 25 nach außen und verlängern auf diese Weise die Anschlussstücke 7, bis es zu einer (fluiddichten) Verbindung mit dem nur schematisch (gestrichelt) dargestellten Leitungsstutzen 2 der Funktionsmodule kommt. Vorliegend erfolgt die fluiddichte Anbindung nicht direkt durch die Anschlussstücke 7 selbst, sondern im Bereich der Hülsenelemente 25, die im Bereich der Bordabwinkelung eine geeignete Einführschräge (-Radius) 25b ausbilden.

Vorteilhafterweise kommt es dabei - wie auch bei den anderen Ausgestaltungen der vorliegenden Erfindung - zu einer plastischen Verformung (Verlängerung) der Anschlussstücke 7. Diese können hierfür eine entsprechend geeignete Wellung (Verformungswellung) aufweisen.

Die Erfindung ist jedoch diesbezüglich nicht beschränkt; dies gilt insbesondere auch hinsichtlich der konkreten Ausgestaltung des Federelements 24.

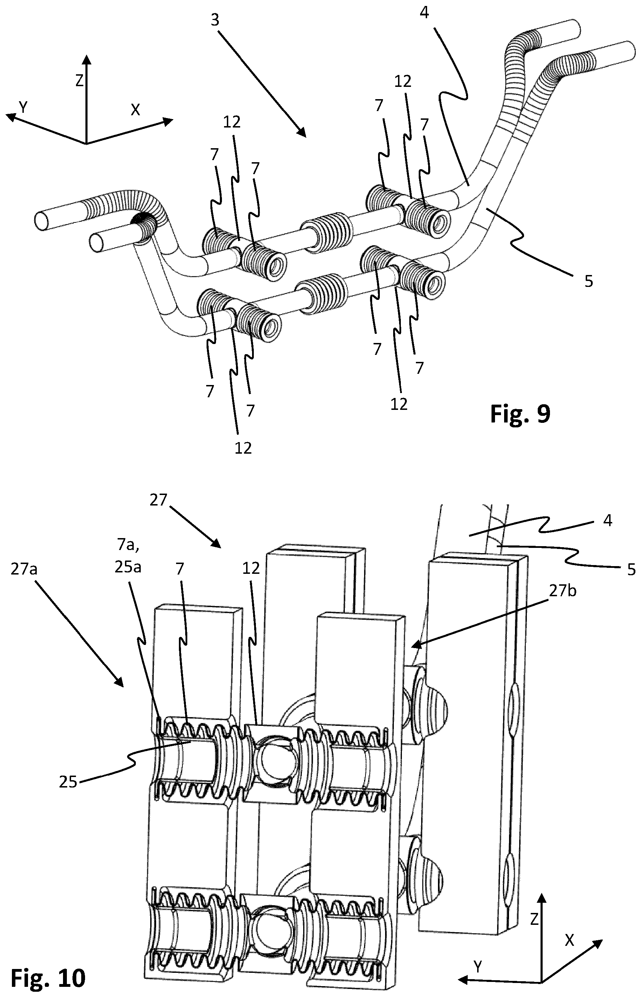

In den Figuren 9 und 10 ist eine Abwandlung der Ausgestaltung gemäß Figur 8 gezeigt, die gänzlich ohne Trägermodule/Grundteile auskommt. Die in Figur 9 gezeigte Verbindungsanordnung 3 weist die bereits mehrfach erwähnten Fluidleitungen 4, 5 mit Verzweigungselementen 12 und davon abzweigenden Anschlussstücken 7 auf. In Figur 10 ist nun außerdem ein geeignetes (Greif-) Werkzeug 27 gezeigt, welches die Anschlussstücke 7 ergreift, sodass diese im Bereich der endständigen Borde 7a formschlüssig gehalten und durch Bewegen von Werkzeug-Hälften 27a, 27b nach innen entlang der Y-Achse komprimierbar sind. Die genannten Werkzeug-Hälften 27a, 27b sind wiederum in Richtung der X-Achse teilbar, um die Anschlussstücke 7 wieder freizugeben, sodass sie sich entspannen und analog zu der Ausgestaltung in Figur 8 mit den Leitungsstutzen 2 (vergleiche Figur 8) verbindbar sind.

Auf diese Weise lässt sich ein Verfahren realisieren, bei dem zum Komprimieren der Anschlussstücke 7) und zum Einbringen der Verbindungsanordnung 3 ein Werkzeug 27 vorgesehen ist, das
- bevorzugt zunächst die Verbindungsanordnung 3 ergreift,
- die Anschlussstücke 7 komprimiert,
- die Verbindungsanordnung 3 positioniert, vorzugsweise inklusive Toleranzausgleich über flexible Leitungselemente in der Verbindungsanordnung 3,
- die Anschlussstücke 7 entspannt und vorzugsweise zusätzlich plastisch bei der Kontaktierung der Leitungsstutzen 2 umformt (durch Auffahren nach außen Richtung der Y-Achse),
- die Anschlussstücke 7 in einen spannungsfreien Zustand, bis auf Eigenspannungen und die durch etwaige Dichtelementreibung verbleibenden Spannungen, rückfedern lässt, und
- anschließend die Verbindungsanordnung 3 freigibt.

Auch bei der Ausgestaltung gemäß den Figuren 9 und 10 ist zu diesem Zweck jeweils ein Hülsenelement 25 vorgesehen, wie weiter oben anhand von Figur 8 detailliert beschrieben. Die endständigen Borde 25a der Hülsenelemente 25 erstrecken sich parallel zu den genannten Borden 7a der Anschlussstücke 7.

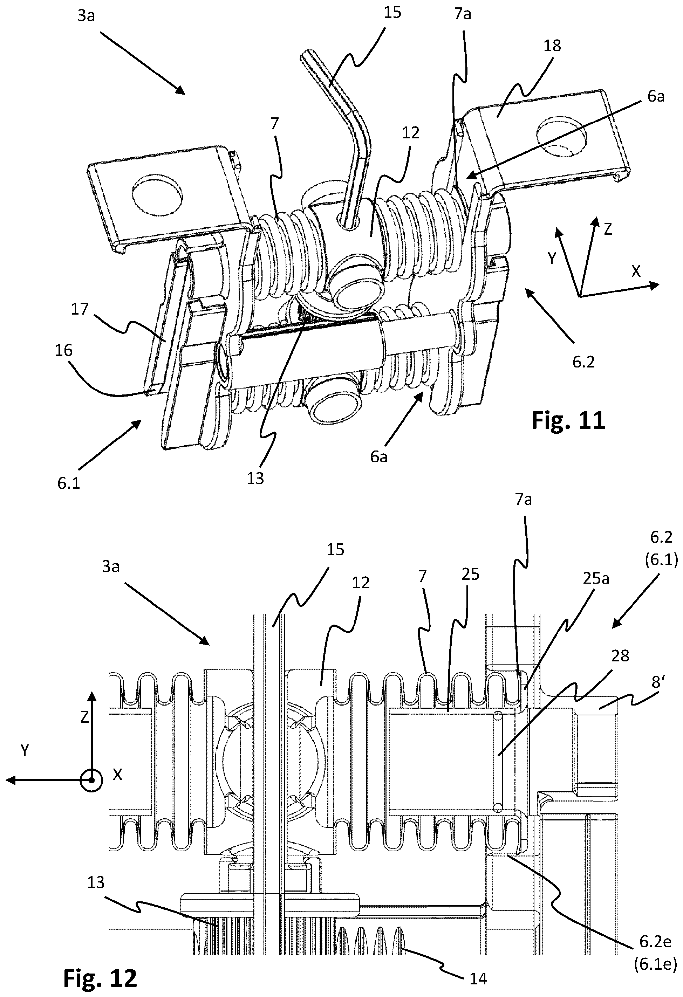

In den Figuren 11 bis 14 sind abschließend nochmals verschiedene Möglichkeiten der Fixierung der Anschlussstücke 7 an den Grundteilen 6.1, 6.2 dargestellt, von denen einige bereits zuvor erwähnt wurden.

Figur 11 zeigt eine Ausgestaltung analog Figur 3, bei der die Anschlussstücke 7 mit ihrem endständigen Bord 7a in eine entsprechende Aufnahme (Einschub) 6a an den Grundteilen 6.1, 6.2 eingeschoben und dort formschlüssig gehalten sind.

In Figur 12 ist eine Ausgestaltung mit sogenannter "Kralle" dargestellt: Die Anschlusstücke 7 weisen (wiederum) einen endständigen Bord 7a auf, welcher Bord 7a mit einer Übermaßpassung in eine Gegenkontur 6.1e, 6.2e der Grundteil 6.1, 6.2 gefügt wird und in Richtung der Fügung verkippt. Bei einer umgekehrten Belastung stellt sich der optional geschlitzte Bord 7a auf und verkrallt sich form- und reibschlüssig (kraftschlüssig) in der Gegenkontur 6.1e, 6.2e, wie gezeigt. Vorzugsweise ist die Gegenkontur 6.1e, 6.2e in einem Kunststoff und der Bord 7a metallisch ausgeführt. Wird der Bord 7a durch einen Schneidprozess, wie einen Stanzprozess geometrisch hergestellt, ist es vorteilhaft, den Schneidgrat so zu stellen, dass eine Verkrallung unterstützt wird und sich dadurch eine besonders vorteilhafte Ausgestaltung ergibt.

Wie man der Figur 12 noch entnimmt, kann im Bereich des Hülsenelements 25 ein Dichtelement (Dichtring, O-Ring) 28 vorhanden sein, um die fluiddichte Anbindung an die Leitungsstutzen (hier nicht gezeigt) zu verbessern.

Gemäß Figur 13 erfolgt die Verbindung von Anschlussstücken 7 (und Hülsenelementen 15) über Schnapphaken 6b, wie bereits weiter oben beschrieben.

In Figur 14 ist eine Ausführungsvariante gezeigt (ebenfalls mit Schnapphaken 6b), bei der das Dichtelement 28 nicht im Bereich des Hülsenelements 25, sondern im Bereich des Elements bei Bezugszeichen 8' angeordnet ist.

Ein Vergleich von Figur 13 Figur 14 zeigt deutlich den Unterschied zwischen dem verlängerten Zustand der Anschlussstücke 7 (Figur 13) und dem Ausgangszustand (Figur 14) vor erfolgter Verlängerung der Anschlussstücke 7 in Richtung der Y-Achse.

Wie der Fachmann leicht erkennt, können die Fixierungsmöglichkeiten für die Anschlussstücke 7 gemäß den Figuren 11 bis 14 grundsätzlich bei allen Ausgestaltungen der Erfindung je nach Belieben bzw. je nach Anforderung zum Einsatz kommen - ausgenommen nur die Ausgestaltung gemäß den Figuren 9 und 10, bei der keine Grundteile verwendet werden, sodass eine entsprechende Fixierung der Anschlussstücke 7 nicht erforderlich ist.

## Patentansprüche

1. Verfahren zum fluidleitenden Verbinden von mittels eines Fluids temperierten Funktionsmodulen (1), insbesondere Batteriemodulen, mit dem Schritt:
a) Bereitstellen der Funktionsmodule (1), welche Funktionsmodule (1) jeweils zumindest einen Leitungsstutzen (2) zum Einleiten und/oder Ausleiten des Fluids aufweisen;
**gekennzeichnet durch** die weiteren Schritte:
b) Anordnen von wenigstens zwei Funktionsmodulen (1) in einem Abstand zueinander derart, dass die betreffenden Leitungsstutzen (2) im Wesentlichen einander genau gegenüberliegend und entlang einer ersten Achse (Y) fluchtend angeordnet sind und in einen Bereich (11) zwischen den Funktionsmodulen (1) münden;
c) Einbringen einer zumindest teilweise flexiblen, vormontierten Verbindungsanordnung (3) in den Bereich (11) zwischen den Funktionsmodulen (1), welche Verbindungsanordnung (3) wenigstens eine Fluidleitung (4, 5) zum Zuführen und/oder Abführen des Fluids und wenigstens zwei von der Fluidleitung (4, 5) oder jeweils von einer der Fluidleitungen (4, 5) abgehende fluidleitende Anschlussstücke (7) aufweist, derart, dass die Anschlussstücke (7) entlang der ersten Achse (Y) jeweils mit einem der Leitungsstutzen (2) fluchten;
d) Verändern eines Abstands zwischen den Anschlussstücken (7) und/oder einer Länge der Anschlussstücke (7) entlang der ersten Achse (Y), so dass die Anschlussstücke (7) jeweils einen der Leitungsstutzen (2) fluidleitend kontaktieren.

2. Verfahren nach Anspruch 1, bei dem
die Verbindungsanordnung (3) entlang einer zweiten Achse (Z) quer zu der ersten Achse (Y) in den Bereich (11) eingebracht wird.

3. Verfahren nach Anspruch 1 oder 2, bei dem
zum Verändern des Abstands und/oder der Länge in Schritt d) eine Abstandsänderungseinrichtung vorhanden ist, die von außerhalb des Bereichs betätigt wird, wobei das Betätigen eine Translationsbewegung entlang einer zweiten Achse (Z) quer zu der ersten Achse (Y) oder eine Drehbewegung um eine zweite Achse (Z) quer zu der ersten Achse (Y) beinhaltet.

4. Verfahren nach Anspruch 3, bei dem
in Schritt d) der Abstand zwischen den Anschlussstücken (7) geändert wird, indem
d1) ein zwischen den Anschlussstücken (7) angeordnetes nockenförmiges Element (9) um die zweite Achse (Z) zwischen den Anschlussstücken (7) gedreht wird; oder
d2) ein keilförmiges Element (23) entlang der zweiten Achse (Z) zwischen die Anschlussstücke (7) eingeschoben wird; oder
d3) eine den Abstand verändernde Getriebeanordnung betätigt wird.

5. Verfahren nach Anspruch 3, bei dem
in Schritt d) die Länge der Anschlussstücke (7) geändert wird, indem
d4) ein die Länge veränderndes keilförmiges Element (23) entlang der zweiten Achse (Z) in den Bereich (11) zwischen den Funktionsmodulen (1) eingeschoben wird; oder
d5) eine die Länge verändernde Getriebeanordnung betätigt wird; oder
d6) die Anschlussstücke (7) vor Schritt c) zunächst komprimiert und in Schritt d) wieder entspannt werden, insbesondere mittels eines entsprechenden Greifwerkzeugs (27); oder
d7) die Länge der Anschlussstücke (7) plastisch geändert wird.

6. Verfahren nach Anspruch 5, Variante d6) oder d7), bei dem zum Komprimieren der Anschlussstücke 7) und zum Einbringen der Verbindungsanordnung (3) ein Werkzeug (27) vorgesehen ist, das
- optional die Verbindungsanordnung (3) ergreift,
- die Anschlussstücke (7) komprimiert,
- die Verbindungsanordnung (3) positioniert, vorzugsweise inklusive Toleranzausgleich über flexible Leitungselemente in der Verbindungsanordnung (3),
- die Anschlussstücke (7) entspannt und zusätzlich plastisch bei der Kontaktierung der Leitungsstutzen (2) umformt,
- die Anschlussstücke (7) in einen spannungsfreien Zustand, bis auf Eigenspannungen und die durch etwaige Dichtelementreibung verbleibenden Spannungen, rückfedern lässt, und
- optional die Verbindungsanordnung (3) freigibt.

7. Verbindungsvorrichtung (3a) zum fluidleitenden Verbinden von mittels eines Fluids temperierten Funktionsmodulen (1), insbesondere Batteriemodulen, welche Funktionsmodule (1) jeweils zumindest einen Leitungsstutzen (2) zum Einleiten und/oder Ausleiten des Fluids aufweisen, die Verbindungsvorrichtung (3a) umfassend:
- ein Trägermodul (6) zum Lagern wenigstens einer Fluidleitung (4, 5) zum Zuführen und/oder Abführen des Fluids;
- wenigstens zwei über das Trägermodul (6) fluidleitend mit der Fluidleitung (4, 5) oder mit jeweils einer der Fluidleitungen (4, 5) verbindbare fluidleitende Anschlussstücke (7), **dadurch gekennzeichnet, dass** die Anschlussstücke (7) entlang einer ersten Achse (Y) fluchten;
- und dass eine Kinematikeinrichtung, die an dem Trägermodul (6) angeordnet ist, durch deren Betätigung eine Veränderung eines Abstands zwischen den Anschlussstücken (7) und/oder einer Länge der Anschlussstücke (7) bewirkbar ist, um die Anschlussstücke (7) jeweils mit einem der Leitungsstutzen (2) fluidleitend zu verbinden, wobei die Veränderung entlang der ersten Achse (Y) bewirkbar ist, und wobei vorzugsweise die erste Achse (Y) im Wesentlichen quer zu einer Erstreckungsrichtung der einen Fluidleitung (4, 5) orientiert ist.

8. Verbindungsvorrichtung (3a) nach Anspruch 7, bei der
die Anschlussstücke (7) als flexible Metallbälge mit einem gewellten Abschnitt ausgebildet sind oder solche Metallbälge umfassen, welche Metallbälge vorzugsweise mechanisch vorgespannt sind, insbesondere mittels eines zusätzlichen Federelements (24); und/oder
die Anschlussstücke (7) ein Hülsenelement (25) umfassen, das für eine fluidleitende Verbindung mit einem Leitungsstutzen (2) ausgebildet und vorgesehen ist, insbesondere durch Vorsehen einer Einführschräge oder eines Einführradius (25b).

9. Verbindungsvorrichtung (3a) nach Anspruch 7 oder 8, bei der das Trägermodul (6) zwei beweglich miteinander verbundene Grundteile (6.1, 6.2) aufweist, die jeweils eines der Anschlussstücke (7) halten oder aufnehmen, und bei der
a) die Kinematikeinrichtung ein zwischen den Anschlussstücken (7) und/oder den Grundteilen (6.1, 6.2) angeordnetes nockenförmiges Element (9) umfasst, welches Element (9) um eine zweite Achse (Z) drehbar an dem Trägermodul (6) gelagert ist, sodass über eine Drehung des Elements (9) die Veränderung des Abstands zwischen den Anschlussstücken (7) bewirkbar ist; oder
b) die Kinematikeinrichtung ein zwischen den Anschlussstücken (7) und/oder den Grundteilen (6.1, 6.2) angeordnetes keilförmiges Element (23) umfasst, welches Element (23) entlang einer zweiten Achse (Z) bewegbar an dem Trägermodul (6) gelagert ist, sodass über eine Bewegung des Elements (23) die Veränderung des Abstands zwischen den Anschlussstücken (7) bewirkbar ist,
wobei vorzugsweise die Grundteile (6.1, 6.2) jeweils wenigstens einen Anschluss für eine Fluidleitung (4, 5) aufweisen, welcher Anschluss mit dem betreffenden Anschlussstück in (7) fluidleitender Verbindung steht.

10. Verbindungsvorrichtung (3a) nach einem der Ansprüche 7 bis 9, bei der das Trägermodul (6) wenigstens zwei beweglich miteinander verbundene Grundteile (6.1, 6.2) aufweist, die jeweils eines der Anschlussstücke (7) halten oder aufnehmen, sowie ein zwischen den Anschlussstücken (7) und/oder den Grundteilen (6.1, 6.2) angeordnetes Verzweigungselement (12), welches Verzweigungselement (12) die Anschlussstücke (7) fluidleitend miteinander verbindet, und bei der die Kinematikeinrichtung eine Getriebeanordnung umfasst, durch deren Betätigung die Veränderung der Länge der Anschlussstücke (7) bewirkbar ist, indem die Grundteile (6.1, 6.2) voneinander wegbewegt werden,
wobei vorzugsweise die Getriebeanordnung wenigstens ein erstes Zahnrad (13 und wenigstens eine Zahnstange (14) aufweist, die mit dem ersten Zahnrad (13) in Eingriff steht, welches erste Zahnrad (13) um eine zweite Achse (Z) drehbar ist, während die Zahnstange (14) parallel zu den Anschlussstücken (7) orientiert ist, wobei höchst vorzugsweise die Getriebeanordnung durch das Verzweigungselement (12) hindurch betätigbar ist.

11. Verbindungsvorrichtung (3a) nach Anspruch 9 oder 10, bei der
die Grundteile (6.1, 6.2) mit Funktionsflächen zur formschlüssigen Aufnahme, insbesondere durch Schnappverbindungen, für weitere Leitungen oder Rohre (20) ausgestattet sind, welche Funktionsflächen vorzugsweise in Teilflächen an den jeweiligen Grundteilen (6.1, 6.2) aufgeteilt sind, um nur im Verbund bei korrekter Montage eine Aufnahme der weiteren Leitungen oder Rohre (20) zu erlauben.

12. Verbindungsvorrichtung (3a) nach einem der Ansprüche 9 bis 11, bei der die Anschlussstücke (7) an ihrem einen Ende mit den Grundteilen (6.1, 6.2) kraft- oder formschlüssig verbunden sind, vorzugsweise indem
- die Grundteile (6.1, 6.2) eine Anordnung von Schnapphaken (6b) aufweisen, die mit einem endständigen Bord (7a) eines Anschlussstücks (7) formschlüssig zusammenwirken, vorzugsweise gemeinsam mit einem endständigen Flansch (25a) des Hülsenelements (25) gemäß Anspruch 8; oder
- die Grundteile (6.1, 6.2) eine Einführstruktur (6a) aufweisen, in die ein endständiger Bord (7a) jeweils eines Anschlussstücks (7) eingeführt oder einführbar ist, vorzugsweise in Richtung der zweiten Achse (Z) gemäß Anspruch 10, welche Einführstruktur (6a) mit dem endständigen Bord (7a) eines Anschlussstücks (7) formschlüssig zusammenwirkt, vorzugsweise gemeinsam mit einem endständigen Flansch (25a) des Hülsenelements (25) gemäß Anspruch 8; oder
- die Anschlussstücke (7) jeweils einen endständigen, optional geschlitzten Bord (7a) aufweisen, welcher Bord (7a) mit einer Übermaßpassung in eine Gegenkontur (6.1e, 6.2e) an einem betreffenden Grundteil (6.1, 6.2) gefügt und in Richtung der Fügung verkippt ist, welche Gegenkontur vorzugsweise (6.1e, 6.2e) in einem Kunststoff ausgebildet ist, während der Bord (7a) vorzugsweise metallisch ausgeführt ist.

13. Verbindungsanordnung (3), umfassend wenigstens eine Verbindungsvorrichtung (3a) nach einem der Ansprüche 7 bis 12 und wenigstens eine Fluidleitung (4, 5) zum Zuführen und/oder Abführen des Fluids, welche Fluidleitung (4, 5) über das Trägermodul (6) fluidleitend mit den Anschlussstücken (7) verbunden ist.

14. Mittels eines Fluids temperierte Funktionsmodule (1), insbesondere Batteriemodule, welche Funktionsmodule (1) jeweils zumindest einen Leitungsstutzen (2) zum Einleiten und/oder Ausleiten des Fluids aufweisen, mit einer Verbindungsanordnung (3) gemäß Anspruch 13, wobei wenigstens zwei Funktionsmodule (1) in einem Abstand zueinander angeordnet sind, sodass die betreffenden Leitungsstutzen (2) im Wesentlichen einander genau gegenüberliegend und entlang einer ersten Achse (Y) fluchtend angeordnet sind und in einen Bereich (11) zwischen den Funktionsmodulen (1) münden, wobei die Leitungsstutzen (2) fluidleitend mittels der Verbindungsvorrichtung (3a) mit der Fluidleitung (4, 5) verbunden sind;
bei denen vorzugsweise die Verbindungsanordnung (3) wenigstens zwei Fluidleitungen (4, 5) umfasst, eine zum Zuführen und eine zum Abführen des Fluids, und die Funktionsmodule (1) jeweils zumindest zwei Leitungsstutzen (2) aufweisen, von denen einer mit der Fluidleitung (4) zum Zuführen und einer mit der Fluidleitung (5) zum Abführen des Fluids verbunden ist.

## Claims

1. Method for fluidically connecting functional modules (1) that are temperature-controlled by a fluid, in particular battery modules, comprising the step of:
a) providing the functional modules (1), which functional modules (1) each have at least one line port (2) for directing the fluid in and/or out;
**characterized by** the further steps of:
b) disposing at least two functional modules (1) at a mutual spacing such that the respective line ports (2) are disposed substantially directly opposite each other and aligned along a first axis (Y), and open into a range (11) between the functional modules (1);
c) incorporating an at least partially flexible, preassembled connection assembly (3) into the range (11) between the functional modules (1), which connection assembly (3) has at least one fluid line (4, 5) for feeding and/or discharging the fluid and at least two fluidic connector pieces (7) which branch off from the fluid line (4, 5) or each branch off from one of the fluid lines (4, 5), such that the connector pieces (7) are each aligned with one of the line ports (2) along the first axis (Y);
d) modifying a spacing between the connector pieces (7) and/or a length of the connector pieces (7) along the first axis (Y), such that the connector pieces (7) each fluidically contact one of the line ports (2).

2. Method according to claim 1, wherein
the connection assembly (3) is incorporated into the range (11) along a second axis (Z) transverse to the first axis (Y).

3. Method according to claim 1 or 2, wherein,
for modifying the spacing and/or the length in step d), a spacing modification installation is provided which is activated from outside the range, whereby the activation includes a translatory movement along a second axis (Z) transverse to the first axis (Y) or a rotational movement about a second axis (Z) transverse to the first axis (Y).

4. Method according to claim 3, wherein
in step d), the spacing between the connector pieces (7) is modified by
d1) rotating a cam-shaped element (9), disposed between the connector pieces (7), about the second axis (Z) between the connector pieces (7); or
d2) inserting a wedge-shaped element (23) along the second axis (Z) between the connector pieces (7); or
d3) activating a spacing-modifying gear assembly.

5. Method according to claim 3, wherein
in step d), the length of the connector pieces (7) is modified by
d4) inserting a length-modifying wedge-shaped element (23) along the second axis (Z) into the range (11) between the functional modules (1); or
d5) activating a length-modifying gear assembly; or
d6) initially compressing the connector pieces (7) prior to step c) and relaxing them again in step d), in particular by means of a corresponding gripping tool (27); or
d7) plastically modifying the length of the connector pieces (7).

6. Method according to claim 5, variant d6) or d7), wherein
a tool (27) is provided for compressing the connector pieces (7) and incorporating the connection assembly (3), which tool:
- optionally grips the connection assembly (3);
- compresses the connector pieces (7);
- positions the connection assembly (3), preferably including compensation of tolerances by way of flexible line elements in the connection assembly (3);
- relaxes the connector pieces (7) and additionally plastically deforms them when contacting the line ports (2);
- permits the connector pieces (7) to rebound to a state which, except for inherent stresses and stresses remaining as a result of any friction of sealing elements, is non-stressed; and
- optionally releases the connection assembly (3).

7. Connection device (3a) for fluidically connecting functional modules (1) that are temperature-controlled by a fluid, in particular battery modules, which functional modules (1) each have at least one line port (2) for directing the fluid in and/or out, the connection device (3a) comprising:
- a carrier module (6) for mounting at least one fluid line (4, 5) for feeding and/or discharging the fluid;
- at least two fluidic connector pieces (7) which, by way of the carrier module (6), are fluidically connectable to the fluid line (4, 5) or to a respective one of the fluid lines (4, 5), **characterized in that** the connector pieces (7) are aligned along a first axis (Y);
- and **in that**
a kinematic installation is disposed on the carrier module (6), by activation of which a modification of a spacing between the connector pieces (7) and/or a length of the connector pieces (7) can be effected in order to fluidically connect the connector pieces (7) to a respective one of the line ports (2), wherein the modification can be effected along the first axis (Y), and wherein the first axis (Y) is preferably oriented substantially transverse to a direction of extent of the one fluid line (4, 5).

8. Connection device (3a) according to claim 7, wherein
the connector pieces (7) are configured as flexible metal bellows having a corrugated portion or comprise such metal bellows, which metal bellows are preferably mechanically pretensioned, in particular by means of an additional spring element (24); and/or
the connector pieces (7) comprise a sleeve element (25) which is configured and provided for a fluidic connection to a line port (2), in particular by providing an introduction ramp or an introduction radius (25b).

9. Connection device (3a) according to claim 7 or 8, wherein
the carrier module (6) has two basic parts (6.1, 6.2) which are movably connected to each other and each hold or receive one of the connector pieces (7), and wherein
a) the kinematic installation comprises a cam-shaped element (9) disposed between the connector pieces (7) and/or the basic parts (6.1, 6.2), which element (9) is mounted on the carrier module (6) for rotation about a second axis (Z), such that the modification of the spacing between the connector pieces (7) can be effected by rotating the element (9); or
b) the kinematic installation comprises a wedge-shaped element (23) disposed between the connector pieces (7) and/or the basic parts (6.1, 6.2), which element (23) is mounted on the carrier module (6) for movement along a second axis (Z), such that the modification of the spacing between the connector pieces (7) can be effected by moving the element (23), wherein the basic parts (6.1, 6.2) preferably each have at least one connector for a fluid line (4, 5), which connector is fluidically connected to the respective connector piece (7).

10. Connection device (3a) according to any one of claims 7 to 9, wherein the carrier module (6) has at least two basic parts (6.1, 6.2) which are movably connected to each other and each hold or receive one of the connector pieces (7), as well as a branching element (12) disposed between the connector pieces (7) and/or the basic parts (6.1, 6.2), which branching element (12) fluidically connects the connector pieces (7) to each other, and wherein the kinematic installation comprises a gear assembly by the activation of which the modification of the length of the connector pieces (7) can be effected by moving the basic parts (6.1, 6.2) away from each other,
wherein the gear assembly preferably has at least one first gear wheel (13) and at least one rack (14) which engages with the first gear wheel (13), which first gear wheel (13) is rotatable about a second axis (Z), while the rack (14) is oriented parallel to the connector pieces (7), wherein the gearbox assembly is most preferably activatable through the branching element (12).

11. Connection device (3a) according to claim 9 or 10, wherein
the basic parts (6.1, 6.2) are equipped with functional faces for the form-fitting reception of further lines or pipes (20), in particular by means of snap-fit connections, which functional faces are preferably divided into sub-faces on the respective basic parts (6.1, 6.2) so as to permit the further lines or pipes (20) to be received only when the basic parts are joined and correctly assembled.

12. Connection device (3a) according to any one of claims 9 to 11, wherein the connector pieces (7), at one end thereof, are connected to the basic parts (6.1, 6.2) in a force-fitting or form-fitting manner, preferably in that
- the basic parts (6.1, 6.2) have an assembly of snap-fit hooks (6b) which interact in a form-fitting manner with an end-proximal rim (7a) of a connector piece (7), preferably together with an end-proximal flange (25a) of the sleeve element (25) according to claim 8; or
- the basic parts (6.1, 6.2) have an introduction structure (6a) into which an end-proximal rim (7a) of a respective connector piece (7) is introduced or can be introduced, preferably in the direction of the second axis (Z) according to claim 10, which introduction structure (6a) interacts in a form-fitting manner with the end-proximal rim (7a) of a connector piece (7), preferably together with an end-proximal flange (25a) of the sleeve element (25) according to claim 8; or
- the connector pieces (7) each have an end-proximal, optionally slotted rim (7a), which rim (7a) is joined with an interference fit in a mating contour (6.1e, 6.2e) on a respective basic part (6.1, 6.2) and is tilted in the joining direction, which mating contour (6.1e, 6.2e) is preferably formed in a plastics material, while the rim (7a) is preferably made of metal.

13. Connection assembly (3) comprising at least one connection device (3a) according to any one of claims 7 to 12 and at least one fluid line (4, 5) for feeding and/or discharging the fluid, which fluid line (4, 5) is fluidically connected to the connector pieces (7) by way of the carrier module (6).

14. Functional modules (1) that are temperature-controlled by a fluid, in particular battery modules, which functional modules (1) each have at least one line port (2) for directing the fluid in and/or out, having a connection assembly (3) according to claim 13, wherein at least two functional modules (1) are disposed at a mutual spacing such that the respective line ports (2) are disposed substantially directly opposite each other and aligned along a first axis (Y), and open into a range (11) between the functional modules (1), wherein the line ports (2) are fluidically connected to the fluid line (4, 5) by means of the connection device (3a);
wherein the connection assembly (3) preferably comprises at least two fluid lines (4, 5), one for feeding the fluid and one for discharging the fluid, and the functional modules (1) each have at least two line ports (2), of which one is connected to the fluid line (4) for feeding the fluid and one is connected to the fluid line (5) for discharging the fluid.

## Revendications

1. Procédé de connexion fluidique de modules fonctionnels (1), en particulier de modules de batterie, tempérés au moyen d'un fluide, avec l'étape de :
a) mise à disposition des modules fonctionnels (1), lesquels modules fonctionnels (1) présentent respectivement au moins un raccord de conduite (2) destiné à l'entrée et/ou à la sortie du fluide ;
**caractérisé par** les étapes supplémentaires de :
b) disposition d'au moins deux modules fonctionnels (1) à une distance l'un de l'autre de sorte que les raccords de conduite (2) concernés sont disposés sensiblement en vis-à-vis les uns des autres et alignés le long d'un premier axe (Y), et débouchent dans une zone (11) entre les modules fonctionnels (1) ;
c) introduction dans la zone (11) entre les modules fonctionnels (1) d'un agencement de connexion (3) prémonté et au moins partiellement flexible, lequel agencement de connexion (3) présente au moins une conduite de fluide (4, 5) destinée à l'entrée et/ou à l'évacuation du fluide et au moins deux parmi les pièces de raccordement fluidiques (7) partant de la conduite de fluide (4, 5) ou respectivement de l'une des conduites de fluide (4, 5) de sorte que les pièces de raccordement (7) sont alignés le long du premier axe (Y) respectivement avec l'un des raccord de conduite (2) ;
d) modification d'une distance entre les pièces de raccordement (7) et/ou d'une longueur des pièces de raccordement (7) le long du premier axe (Y), de sorte que les pièces de raccordement (7) soient respectivement en contact fluidique avec l'un des raccords de conduite (2).

2. Procédé selon la revendication 1, dans lequel
l'agencement de connexion (3) est introduit dans la zone (11) le long d'un second axe (Z) perpendiculaire au premier axe (Y).

3. Procédé selon la revendication 1 ou 2, dans lequel
pour modifier la distance et/ou la longueur à l'étape d), un appareil de modification de distance est prévu, qui est actionné depuis l'extérieur de la zone, dans lequel l'actionnement contient un mouvement de translation le long d'un second axe (Z) perpendiculaire au premier axe (Y) ou un mouvement de rotation autour d'un second axe (Z) perpendiculaire au premier axe (Y).

4. Procédé selon la revendication 3, dans lequel
à l'étape d), la distance entre les pièces de raccordement (7) est modifiée en ce que
d1) un élément en forme de came (9) disposé entre les pièces de raccordement (7) est tourné autour du second axe (Z) entre les pièces de raccordement (7) ; ou
d2) un élément en forme de coin (23) est inséré le long du second axe (Z) entre les pièces de raccordement (7) ; ou
d3) un agencement d'engrenage modifiant la distance est actionné.

5. Procédé selon la revendication 3, dans lequel
à l'étape d), la longueur des pièces de raccordement (7) est modifiée en ce que
d4) un élément en forme de coin (23) modifiant la longueur est inséré le long du second axe (Z) dans la zone (11) entre les modules fonctionnels (1) ; ou
d5) un agencement d'engrenage modifiant la longueur est actionné ; ou
d6) les pièces de raccordement (7) sont d'abord comprimées avant l'étape c) et relâchées à l'étape d), en particulier au moyen d'un outil de préhension (27) correspondant ; ou
d7) la longueur des pièces de raccordement (7) est modifiée par déformation plastique.

6. Procédé selon la revendication 5, variante d6) ou d7), dans lequel
pour comprimer les pièces de raccordement (7) et pour introduire l'agencement de connexion (3), un outil (27) est prévu, qui
- facultativement saisit l'agencement de connexion (3),
- comprime les pièces de raccordement (7),
- positionne l'agencement de connexion (3), de préférence avec une compensation de tolérance par l'intermédiaire d'éléments de conduite flexibles dans l'agencement de connexion (3),
- détend et déforme plastiquement les pièces de raccordement (7) lors de la mise en contact des pièces de raccordement (2),
- laisse les pièces de raccordement (7) revenir à un état sans contrainte, à l'exception de contraintes résiduelles et de celles résultant d'un éventuel frottement d'élément d'étanchéité, et
- facultativement libère l'agencement de connexion (3).

7. Dispositif de connexion (3a) pour la connexion fluidique de modules fonctionnels (1), en particulier de modules de batterie, tempérés au moyen d'un fluide, lesquels modules fonctionnels (1) présentent respectivement au moins un raccord de conduite (2) pour l'entrée et/ou la sortie du fluide, le dispositif de connexion (3a) comprenant :
- un module de support (6) pour le stockage d'au moins une conduite de fluide (4, 5) pour l'entrée et/ou l'évacuation du fluide ;
- au moins deux pièces de raccordement (7) fluidiques pouvant être raccordées fluidiquement par l'intermédiaire du module de support (6) à la conduite de fluide (4, 5) ou respectivement à l'une des conduites de fluide (4, 5), **caractérisé en ce que** les pièces de raccordement (7) sont alignées le long d'un premier axe (Y) ;
- et **en ce que**
un appareil cinématique, qui est disposé au niveau du module de support (6), permet par son actionnement de modifier une distance entre les pièces de raccordement (7) et/ou une longueur des pièces de raccordement (7) pour connecter fluidiquement les pièces de raccordement (7) à l'un des raccords de fluide (2) respectivement, dans lequel la modification peut être provoquée le long du premier axe (Y), et dans lequel le premier axe (Y) est de préférence orienté sensiblement transversalement par rapport à une direction d'extension de l'une conduite de fluide (4, 5).

8. Dispositif de connexion (3a) selon la revendication 7, dans lequel
les pièces de raccordement (7) sont conçus en tant que soufflets métalliques flexibles avec une section ondulée ou comprennent de tels soufflets métalliques, lesquels soufflets métalliques sont de préférence précontraints mécaniquement, en particulier au moyen d'un élément à ressort supplémentaire (24) ; et/ou
les pièces de raccordement (7) comprennent un élément de manchon (25) qui est conçu et prévu pour la connexion fluidique avec un raccord de conduite (2), en particulier par la présence d'une pente d'introduction ou d'un rayon d'introduction (25b).

9. Dispositif de connexion (3a) selon la revendication 7 ou 8, dans lequel
le module de support (6) présente deux parties de base (6.1, 6.2) connectées entre elles de manière mobile, qui maintiennent ou reçoivent respectivement l'une des pièces de raccordement (7), et dans lequel
a) l'appareil cinématique comprend un élément en forme de came (9) disposé entre les pièces de raccordement (7) et/ou les parties de base (6.1, 6.2), lequel élément (9) est monté au niveau du module de support (6) de manière rotative autour d'un second axe (Z), de sorte qu'une rotation de l'élément (9) permet de modifier la distance entre les pièces de raccordement (7) ; ou
b) l'appareil cinématique comprend un élément en forme de coin (23) entre les pièces de raccordement (7) et/ou les parties de base (6.1, 6.2), lequel élément (23) est monté de manière mobile le long d'un second axe (Z) au niveau du module de support (6) le long d'un second axe (Z), de sorte que le déplacement de l'élément (23) permet de modifier la distance entre les pièces de raccordement (7), dans lequel les parties de base (6.1, 6.2) présentent de préférence respectivement au moins un raccord pour une conduite de fluide (4, 5), lequel raccord est en communication fluidique avec la pièce de raccordement concernée (7).

10. Dispositif de connexion (3a) selon l'une quelconque des revendications 7 à 9, dans lequel le module de support (6) présente au moins deux parties de base (6.1, 6.2) connectées entre elles de manière mobile, qui maintiennent ou reçoivent respectivement l'une des pièces de raccordement (7), ainsi qu'un élément de dérivation (12) entre les pièces de raccordement (7) et/ou les parties de base (6.1, 6.2), lequel élément de dérivation (12) connecte fluidiquement les pièces de raccordement (7) entre elles, et dans lequel l'appareil cinématique comprend un agencement d'engrenages dont l'actionnement permet de modifier la longueur des pièces de raccordement (7) en écartant les parties de base (6.1, 6.2) l'une de l'autre,
l'agencement d'engrenages présente de préférence au moins une première roue dentée (13) et au moins une crémaillère (14) en prise avec la première roue dentée (13), laquelle première roue dentée (13) peut tourner autour d'un second axe (Z), tandis que la crémaillère (14) est orientée parallèlement aux pièces de raccordement (7), dans lequel l'agencement d'engrenages peut de préférence être actionné par l'intermédiaire de l'élément de dérivation (12).

11. Dispositif de connexion (3a) selon la revendication 9 ou 10, dans lequel
les parties de base (6.1, 6.2) sont équipées de surfaces fonctionnelles pour le logement par complémentarité de formes de conduites ou tuyaux supplémentaires (20), en particulier par des connexions par encliquetage, lesquelles surfaces fonctionnelles sont de préférence divisées en sous-surfaces au niveau de leurs parties de base respectives (6.1, 6.2) pour permettre la réception des conduites ou tuyaux supplémentaires (20) uniquement lors d'un montage correct.

12. Dispositif de connexion (3a) selon l'une quelconque des revendications 9 à 11, dans lequel les pièces de raccordement (7) sont connectés au niveau de l'une de leurs extrémités aux parties de base (6.1, 6.2) à force ou par complémentarité de formes, de préférence en ce que
- les parties de base (6.1, 6.2) présentent un agencement de crochets d'encliquetage (6b) qui coopèrent par complémentarité de formes avec un bord d'extrémité (7a) d'une pièce de raccordement (7), de préférence conjointement avec une bride d'extrémité (25a) de l'élément de manchon (25) selon la revendication 8 ; ou
- les parties de base (6.1, 6.2) présentent une structure d'insertion (6a) dans laquelle un bord d'extrémité (7a) d'une pièce de raccordement (7) est inséré ou insérable, de préférence en direction du second axe (Z) selon la revendication 10, laquelle structure d'insertion (6a) coopère par complémentarité de formes avec le bord d'extrémité (7a) d'une pièce de raccordement (7), de préférence conjointement avec une bride d'extrémité (25a) de l'élément de manchon (25) selon la revendication 8 ; ou
- les pièces de raccordement (7) présentent respectivement un bord d'extrémité (7a), facultativement fendu, lequel bord (7a) est assemblé avec un ajustement serré dans un contre-profil (6.1e, 6.2e) d'une partie de base correspondante (6.1, 6.2) et incliné en direction de l'assemblage, lequel contre-profil est de préférence (6.1e, 6.2e) conçu en matière plastique, tandis que le bord (7a) est de préférence métallique.

13. Agencement de connexion (3) comprenant au moins un dispositif de connexion (3a) selon l'une quelconque des revendications 7 à 12 et au moins une conduite de fluide (4, 5) pour l'entrée et/ou l'évacuation du fluide, laquelle conduite de fluide (4, 5) est connectée fluidiquement aux pièces de raccordement (7) par l'intermédiaire du module de support (6).

14. Modules fonctionnels (1) tempérés au moyen d'un fluide, en particulier des modules de batterie, lesquels modules fonctionnels (1) présentent respectivement au moins un raccord de conduite (2) destiné à l'entrée et/ou à l'évacuation du fluide, avec un agencement de connexion (3) selon la revendication 13, dans lesquels au moins deux modules fonctionnels (1) sont disposés à une distance l'un de l'autre, de sorte que les raccords de conduite concernés (2) sont disposés sensiblement en vis-à-vis et alignés le long d'un premier axe (Y) et débouchent dans une zone (11) entre les modules fonctionnels (1), dans lesquels les raccords de conduite (2) sont connectés fluidiquement à la conduite de fluide (4, 5) au moyen du dispositif de connexion (3a) ;
dans lesquels, de préférence, l'agencement de connexion (3) comprend au moins deux conduites de fluide (4, 5), une pour l'entrée et l'autre pour l'évacuation du fluide, et les modules fonctionnels (1) présentent respectivement au moins deux raccords de conduite (2), dont l'un est connecté à la conduite de fluide (4) pour l'entrée et l'autre à la conduite de fluide (5) pour l'évacuation du fluide.
